(19) **Europäisches Patentamt**

**European Patent Office**

**Office européen des brevets**

(11) **EP 1 239 598 A2**

(12) **EUROPEAN PATENT APPLICATION**

(43) Date of publication:
**11.09.2002 Bulletin 2002/37**

(51) Int Cl.$^7$: **H04B 1/12**, H04B 1/707

(21) Application number: **01308101.3**

(22) Date of filing: **24.09.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **09.03.2001 JP 2001067601**<br><br>(71) Applicant: **Hitachi Kokusai Electric Inc.**<br>**Tokyo 164-8511 (JP)** | (72) Inventor: **Takada, Masatoshi,**<br>**Hitachi Kokusai Electric Inc.**<br>**Tokyo (JP)**<br><br>(74) Representative: **Senior, Alan Murray**<br>**J.A. KEMP & CO.,**<br>**14 South Square,**<br>**Gray's Inn**<br>**London WC1R 5JJ (GB)** |

(54) **Interference-signal removing apparatus**

(57) To provide an interference-signal removing apparatus for improving the quality of interference-removed input signals by removing only interference signals having a comparatively high level from input signals including wide-band signals and narrow-band interference signals. For example, input-signal control means 1 and 2 restrict effective word lengths of digital values of input signals, interference-signal estimation means 3 estimates interference signals included in input signals in accordance with effective-word-length-restricted input signals, interference-signal extraction means 4 extracts interference signals included input signals in accordance with an estimation result of the interference-signal estimation means, and interference-signal removal means 5 removes extracted interference signals from input signals.

Fig. 1

EP 1 239 598 A2

**Description**

The present invention relates to an interference-signal removing apparatus for removing narrow-band interference signals from input signals including wide-band desired signals and the narrow-band interference signals, particularly to an art for improving the quality of interference-removed input signals by removing only interference signals having relatively high levels from the input signals.

For example, reception signals received by a receiver may include a signal that should be received (desired signal) and a signal interfering with the desired signal (interference signal).

First, a wide-band desired signal and a narrow-band interference signal will be described below by using radio LAN (Local Area Network) of IEEE 802.11 as an example.

The terms "wide band" and "narrow band" are used as relative meanings. Specifically, a signal having a sufficiently-large occupying band width compared to the occupying band width of a narrow-band interference signal is referred to as a wide-band signal and a signal having an occupying band width 10 times larger than the occupying band width of, for example, a narrow-band interference signal is referred to as a wide-band signal. As an example, in the case of the radio LAN described below, a wide-band signal has an occupying band width of, for example, 26 MHz (frequency per wave) and a narrow-band signal has an occupying band width of, for example, 2 MHz (frequency per wave).

The radio LAN of IEEE 802.11 roughly uses the direct diffusion (DSSS: Direct Sequence Spread Spectrum) system and the frequency hopping (FHSS: Frequency Hopping Spread Spectrum) system. In accordance with the difference between these modulated waves, it is possible to regard a signal according to the DSSS mode as a wide-band signal and a signal according to the FHSS mode as a narrow-band signal. Moreover, the both systems perform radio communication by using the same frequency band and systematically allow mutual interference. Therefore, it is a matter of course that interference occurs between signals according to the both systems.

In this case, the DSSS mode is a system for communicating (transmitting) a narrow-band signal as a wide-band signal through frequency diffusion and returning the signal to the original narrow-band signal in the demodulation process at the reception side. Therefore, the DSSS mode makes it possible to suppress a narrow-band signal included in a reception signal because the narrow-band signal is diffused to a wide-band signal in the demodulation process. A ratio before or after the above diffusion is referred to as a diffusion coefficient. For example, when the diffusion coefficient is equal to 128, a gain of approx. 21 dB (accurately, 10LOG128) is obtained.

The FHSS mode is a system for communicating a narrow-band signal by changing transmission frequencies of the signal every specific time and thereby using a wide band. Therefore, the FHSS mode makes it possible to suppress the influence of interference by a reception filter of a receiver using the FHSS mode because an occupying band width when fixing a specific time becomes as narrow as 2 MHz and the power per band concerned according to the DSSS mode relatively decreases.

Moreover, in the case of the FHSS mode, even while another transmitter communicates a signal in accordance with the FHSS mode using a different hopping pattern, the probability of using the same frequency at the same time is low. Therefore, the interference between the transmitters does not almost matter. Moreover, the FHSS mode allows frequency hopping by using a wide band compared to the case of the DSSS mode. Therefore, even if a strong interference occurs in the DSSS mode, it is possible to receive a signal in accordance with a frequency band free from interference.

In the case of the DSSS mode, however, a diffusion coefficient may be lowered in order to raise a signal transmission rate. Specifically, when the diffusion coefficient is lowered to 11, a gain is lowered approx. 10 dB (accurately, 10LOG11), moreover the gain is further lowered when the diffusion coefficient is lowered to less than 11, and the suppression effect of an interference signal may not be obtained.

Moreover, the probability that a signal according to the DSSS mode receives an interference is raised because it is started to widely use the standard such as Bluetooth (short-range mobile service) using, for example, the FHSS mode as the radio interface between portable units.

Moreover, as another example, it is considered that an interference in an adjacent frequency band occurs between a communication signal according to the W-CDMA (Wideband-Code Division Multiple Access) mode and a communication signal according to the PHS (Personal Handyphone System) mode, an interference occurs between a wide-band signal of 2.4-GHz-band radio LAN (IEEE 80.2 11) and a narrow-band signal of Bluetooth, or an interference occurs between a CDMA-mode communication signal and a TDMA (Time Division Multiple Access) mode or FDMA (Frequency Division Multiple Access) mode communication signal due to common use of a frequency band, an interference with an unexpected external wave and the like.

As an art for removing the above interference, the following methods have been studied so far: an interference-signal removing method using an adaptive algorithm, an interference-signal moving method using a filter such as a notch filter, and the like. As an example, an art for removing a narrow-band signal interfering with a wide-band signal by a notch filter using a multi-rate filter bank is described in "Application of complex multi-rate filter bank to DS-CDMA/TDMA-signal bundling receiver sharing frequency band (Thesis journal of Institute of Electronics, Information, and Communication Engineers B-11, Vol. J80-B11, No. 12, Dec., 1997)". However, this art also removes the component of a wide-band signal that is a desired wave when removing a narrow-band signal by a filter. Therefore, a problem occurs that a bit error ratio after removing an interference wave is deteriorated.

Then, a conventional interference-signal removing apparatus will be described below. The interference-signal removing apparatus is set to, for example, a receiver for performing radio communication to remove an interference signal included in a signal received from the receiver.

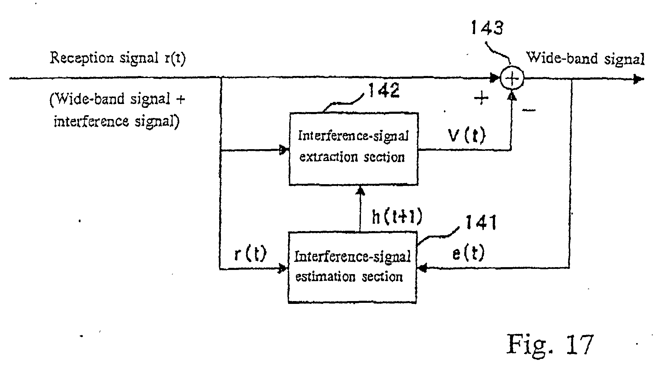

Fig. 17 shows an interference-signal removing apparatus which is provided with an interference-signal estimation section 141, an interference-signal extraction section 142, and a synthesizer 143. In this case, symbol t denotes time.

The interference-signal estimation section 141 inputs a reception signal r(t) in which a wide-band desired signal is synthesized with a plurality of narrow-band interference signals and an interference-removed reception signal e(t), estimates an interference signal included in the reception signal r(t) by using a general adaptive algorithm, and outputs an interference-signal estimation coefficient h(t+1) according to the estimation result to the interference-signal extraction section 142.

The interference-signal extraction section 142 inputs a reception signal r(t), extracts a signal V(t) regarded as an interference signal from the reception signal r(t) in accordance with the interference-signal estimation coefficient h(t+1) input from the interference-signal estimation section 141, and outputs the interference signal V(t) to the synthesizer 143.

The synthesizer 143 synthesizes the reception signal r(t) with the interference signal V(t) output from the interference-signal extraction section 142 in an opposite phase (that is, so that the interference signal V(t) is removed from the reception signal r(t)) and outputs a reception signal e(t) from which the interference signal V(t) is removed. Some of the interference-removed reception signals e(t) output from the synthesizer 143 are input to the interference-signal estimation section 141 and used to estimate an interference signal.

Then, examples of CDMA mode and interference-signal removing apparatuses according to the CDMA mode will be described below.

For example, a mobile communication system using the DS-CDMA mode realizes multiplex communication between a plurality of mobile-station systems and a base-station system by assigning different diffusion codes to the mobile-station systems. Specifically, each mobile-station system diffuses, modulates, and transmits a signal to be transmitted by a diffusion code assigned to its own system while the base-station system demodulates a signal sent from a desired mobile-station system by inversely diffusing a reception signal by using a diffusion code assigned to each mobile-station system. Moreover, a mobile-station system demodulates a signal addressed to its own system by inversely diffusing a signal received from the base-station system by a diffusion code assigned to its own system.

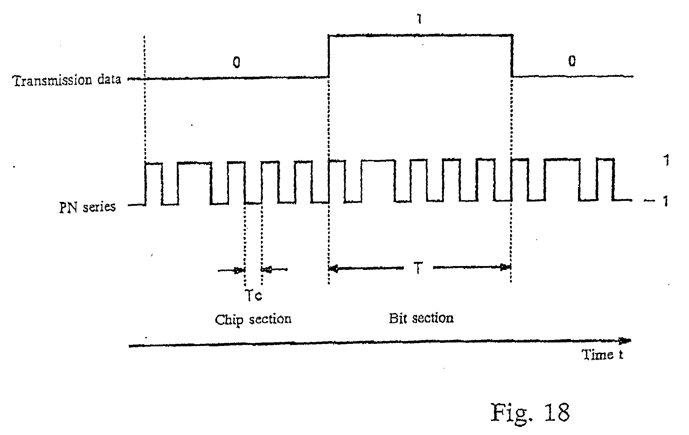

Fig. 18 shows a diffusion-code series constituted of, for example, a PN (pseudonoise signal) series.

As shown in Fig. 18, a diffusion signal of one unit (for one symbol) is constituted of a plurality of chip data values (e.g. string of values "1" and "-1") and it is possible to generate a plurality of different diffusion codes by making patterns of chip-data-value strings different from each other. In this case, a diffusion code has a characteristic that by shifting a certain diffusion code up to one chip time or more, the correlation with this diffusion code disappears.

Moreover, Fig. 18 shows the time width of one chip data (chip interval Tc) and the time width of a diffusion code for one symbol (bit interval T). In this case, the time width of a diffusion code for one symbol corresponds to the time width of transmission data (e.g. values "1" and "0") to be transmitted to a receiver (e.g. base-station system or mobile-station system) from a transmitter (e.g. mobile-station system or base-station system). That is, the change speed of chip data constituting a diffusion code is very high compared to the switching speed (symbol switching speed) of transmission data to be diffused and modulated by the diffusion code.

As described above, in the case of this type of radio communication, a different narrow-band signal (that is, signal according a mode other than the CDMA mode) is unexpectedly added into a wide frequency band used for the communication for which use of a frequency is permitted to cause an interference in some cases. When the above interference signal is larger than the degree of a disturbance due to noises estimated when a system is designed, the number of bit errors increases and the reception quality of a receiver is extremely deteriorated.

Moreover, as described above, it is also considered to realize multiplex communication in accordance with a mode for performing communication by using a comparatively-wide frequency band such as the CDMA mode and a mode for performing communication by using a narrow band such as the FM (Frequency Modulation) mode in order to effective use a frequency band. Specifically, it is principally possible to effectively use a frequency band by multiplexing a signal according to the analog communication mode such as the FM mode to the frequency band of a diffusion signal according to the CDMA mode. However, if a CDMA receiver cannot remove a signal according to the FM mode from a reception signal, the signal interferes with a diffusion signal and thereby, the number of bit errors increases and the reception quality is deteriorated.

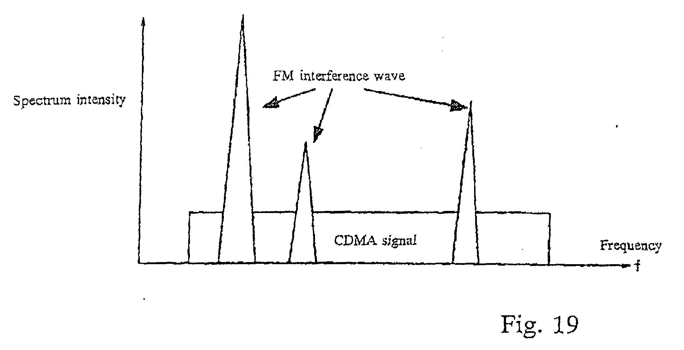

Fig. 19 shows spectrums of reception signals including diffusion signals according to the CDMA mode (CDMA signal) and a signal according to the FM mode (FM interference wave), in which the abscissa denotes frequency and the ordinate denotes spectrum intensity.

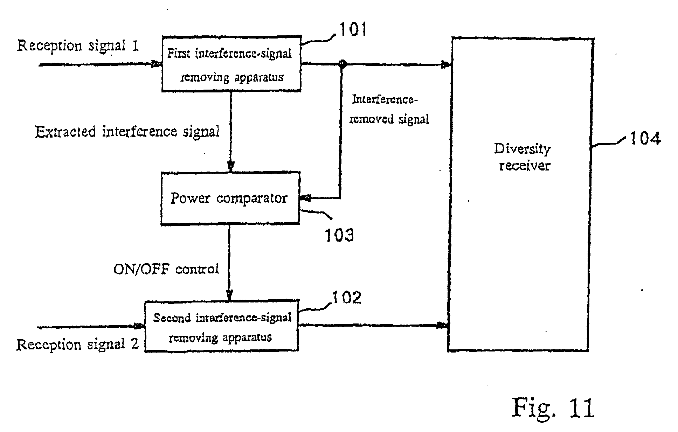

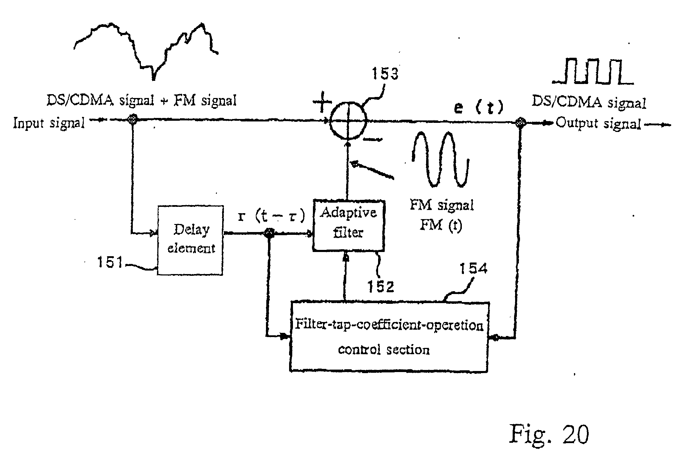

Referring to Figs. 20 to 24, the interference-signal removing apparatus (interference removing circuit) disclosed in the official gazette of Japanese Patent Application No. 11-197296 will be described below by referring to Figs. 11 to 15. The interference-signal removing apparatus disclosed in the official gazette is set to a base-station system, a mobile-station system, or a relay-station system using the CDMA mode to remove narrow-band interference signals from reception signals including wide-band diffusion signals diffused and modulated in accordance with the CDMA mode and the narrow-band interference signals or I and Q components of the reception signal, particularly removes the interference signal by using the characteristic of the diffusion signal.

Fig. 20 shows an interference-signal removing apparatus for removing an FM signal (interference signal) from the input signal r(t) by inputting reception signals including a CDMA signal (desired signal) and the FM signal. In the case of the interference-signal removing apparatus, to remove interference signals from reception signals including diffusion signals diffused and modulated in accordance with the CDMA mode and the interference signals, time-difference means 151 gives a time difference for one chip of a diffusion code or more between two signals obtained by distributing reception signals, extraction means 152 and 154 extract signal components having a correlation between the two signals provided with the time difference as interference-signal components, and removal means 153 removes the extracted interference-signal components from the reception signal.

Specifically, the interference removing apparatus shown in Fig. 20 is provided with a delay element 151 for delaying a reception signal, an adaptive filter 152 for extracting interference-signal components from the delayed reception signal in accordance with a tap-coefficient control signal output from a filter-tap-operation control section 154 to be described later, a subtracter 153 for removing the interference-signal components from the reception signal, and a filter-tap-coefficient-operation control section 154 for outputting a tap-coefficient control signal according to a signal output from the subtracter 153 and the delayed reception signal to the adaptive filter 152.

The configuration and operations of the circuit shown in Fig. 20 will be described below.

The signal r(t) received from the receiver is input to the circuit, which includes a diffusion signal diffused and modulated in accordance with the CDMA mode and an interference signal (such as an FM signal) according to a communication mode using a narrow band. In this case, t indicates time, which is assumed as an integral discrete value using one sample time as the minimum unit in the case of this embodiment.

The above input signal r(t) is first divided into two signals, and one signal is input to the delay element 151 and the other signal is input to the subtracter 153.

The delay element 151 has a function for delaying an input signal for the time width for one chip of a diffusion signal or more and outputting the signal. The time difference is preset to a value capable of eliminating the correlative component of the diffusion signal between the above two signals and leaving the correlative component of an interference signal to be removed.

Specifically, a signal output from the delay element 151 is shown as r(t-$\tau$). In this case, $\tau$ denotes a delay time output from the delay element 151.

The signal (t-$\tau$) output from the delay element 151 is input to the adaptive filter 152 and filter-tap-coefficient-operation control section 154.

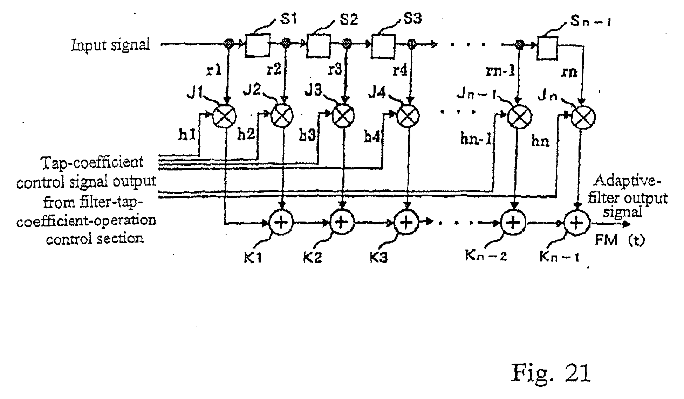

Fig. 21 shows a configuration of the adaptive filter 152.

The adaptive filter 152 shown in Fig. 21 is provided with a shift register constituted of (n-1) storage elements S1 to Sn-1 arranged in series, n multipliers J1 to Jn, and (n-1) adders K1 to Kn-1. In this case, symbol n denotes the number of filter taps.

A signal r(t-$\tau$) output from the delay element 151 is input to the shift register and stored in the storage elements S1 to Sn-1 in time series. Moreover, a signal stored in each of the storage elements S1 to Sn-1 is successively shifted to the following storage element.

Specifically, the series u(t) of the signal r(t-$\tau$) input to the shift register in the shift register is shown by the following expression (1). In the expression (1), u(t) denotes a vector.

In this specification, when a symbol used to show a signal or the like does not show a vector or matrix, the symbol is assumed as scalar.


[Numerical Formula 1]

$$u(t)=\{r1,r2,r3,\cdots,rn\}$$

$$rx = r\,(t\text{-}\tau\text{-}x+1) \qquad\qquad\qquad\qquad \text{(Expression 1)}$$


In this case, a signal r1 is a signal to be input to the shift register at a certain time and output to the multiplier J1 without passing through any one of the storage elements S1 to Sn-1. Moreover, signals r2 to rn are signals to be output from the storage elements S1 to Sn-1 at the time concerned and output to the multipliers J2 to Jn.

The above signals r1 to rn are input to the multipliers J1 and Jn and moreover tape-coefficient control signals h1 to hn are input to the multipliers J1 to Jn from a filter-tap-coefficient-operation control section 154 to be described later one to one. The multipliers J1 to Jn multiply two input signals (that is, weight the signals r1 to rn with the tap-coefficient control signals h1 to hn) and output the multiplication results to the adders K1 to Kn.

In this case, a filter-tap-coefficient series h(t) output from the filter-tap-coefficient-operation control section 154 is shown by the following expression (2). In this case, h(t) denotes a vector.

[Numerical Formula 2]

$$h(t) = \{h1, h2, h3, \cdots, hn\} \qquad \text{(Expression 2)}$$

Moreover, multiplication results output from the multipliers J1 to Jn are totaled by the adders K1 to Kn and the totaled result is output from the adaptive filter 152. In this case, as described later, the filter-tap-coefficient series h(t) of this embodiment is updated one after another by the filter-tap-coefficient-operation control section 154 so that the totaled result becomes the same signal as the interference-signal component included in a reception signal.

Specifically, a signal output from the adaptive filter 152 (that is, the above totaled result) FM(t) is shown by the following expression (3). In this case, Σ in the expression (3) denotes a sum.

[Numerical Formula 3]

$$FM(t) = h(t) * u(t) = \Sigma(hi * ri)(i = 1, 2, \cdots, n) \qquad \text{(Expression 3)}$$

A symbol "*" used for this specification denotes the multiplication between symbols arranged before and after the symbol "*". Particularly, the multiplication between vectors shows the operation for calculating the inner product of two vectors.

As described above, the adaptive filter 152 extracts the above interference signal component from the input delay signal r(t-τ) in accordance with a tap-coefficient control signal output from the filter-tap-coefficient-operation control section 154 and outputs the component to the subtracter 153 as an interference-wave extraction signal FM(t).

The subtracter 153 has a function for inputting the not-delayed input signal r(t) and the signal FM(t) output from the adaptive filter 152, subtracting the output signal FM(t) from the input signal r(t), and outputting a subtraction result e(t).

In this case, the above subtraction result e(t) is a signal output from the interference-signal removing apparatus of this embodiment, which is shown by the following expression (4).

[Numerical Formula 4]

$$e(t) = r(t) - FM(t) \qquad \text{(Expression 4)}$$

In the case of this embodiment, tap-coefficient control signals output from the filter-tap-coefficient-operation control section 154 to be described later are updated one after another and thereby, the above interference-wave extraction signal FM(t) becomes the same signal as an interference signal in a reception signal. Therefore, the above subtraction result e(t) becomes a signal obtained by removing the interference signal from the reception signal, that is, a diffusion signal according to the CDMA mode (ideally, only the diffusion signal).

The filter-tap-coefficient-operation control section 154 has a function for receiving the signal r(t-τ) output from the delay element 151 and the signal e(t) output from the subtracter 153, computing a tap-coefficient in which the signal FM(t) output from the adaptive filter 152 becomes a signal same as an interference-signal component by using the signals r(t-τ) and e(t), and outputting the operated tap-coefficient control signal to the adaptive filter 152.

The filter-tap-coefficient-operation control section 154 of this embodiment can compute the above tap-coefficient control signal by using an algorithm such as LMS (Least Means Square) or RLS (Recursive Least Square). For this embodiment, a case of using an LMS algorithm is described and moreover, a case of using an RLS algorithm will be described later.

First, the general expression of LMS will be described below.

The update expression of LMS is generally shown by the following expression 5.

[Numerical Formula 5]

$$h(t+1)=h(t)+u*e(t)*u(t) \qquad \text{(Expression 5)}$$

In the above expression, h(t) denotes a filter tap coefficient at the time t, μ denotes a step size parameter which is a coefficient about the time or accuracy of convergence, e(t) denotes an error signal at the time t, and u(t) denotes an input signal series at the time t.

Moreover, the above error signal e(t) is generally shown by the following expression (6).

[Numerical Formula 6]

$$e(t)=d(t)-u(t)*h(t) \qquad \text{(Expression 6)}$$

In this case, d(t) is generally referred to as a unique word or training signal, which uses an already-known signal predetermined at the transmission and reception sides. The operation algorithms used for the expressions (5) and (6) make it possible to converge the error signal e(t) to 0 by updating filter-tap-coefficient series one after another.

Then, a case will be described below in which the above LMS algorithm is applied to this embodiment.

When applying the above expression (5) to this embodiment, h(t) serves as a filter-tape-coefficient series output from the filter-tap-coefficient-operation control section 154 to the adaptive filter 152 and u(t) serves as a signal series (shown in the above expression 1) to be output from the delay element 151 to the filter-tap-coefficient-operation control section 154.

Moreover, this embodiment uses a signal (shown in the above expression 4) output from the subtracter 153 as the above error signal e(t) and this is a feature of the interference removing circuit of this embodiment and the processing different from the normal LMS algorithm is performed.

First, if the delay element 151 is not used, the signal e(t) output from the subtracter 153 converges to 0 because the above operation algorithm makes the error signal e(t) approach to 0 and the filter-tap-coefficient series h(t) is generated which removes not only an interference signal but also a diffusion signal according to the CDMA mode from a reception signal.

Moreover, because this embodiment is provided with the above delay element 151, a time difference equal to a delay time τ is present between a signal r(t-τ) input from the delay element 151 to the filter-tap-coefficient-operation control section 154 and the signal e(t) input to the filter-tap-coefficient-operation control section 154 through the subtracter 153.

In this case, the diffusion signal r(t) according to the CDMA mode is not correlated with the diffusion signal r(t-τ) delayed by one-chip time or more from the signal r(t). Therefore, when the operation algorithm converges the error signal e(t) to 0, the diffusion signal component of u(t) is not correlated with r(t) and thereby, the component is left as the error e(t). That is, because the influence of the diffusion signal component theoretically becomes 0 by continuously adding the input signal series u(t) in the above expression (4), the diffusion signal component is not removed but it is left as the error e(t). However, because the interference signal component which temporally slowly fluctuates compared with chip data has a correlation even if there is a delay of several chip times, the filter-tap-coefficient series h(t) capable of removing only the interference signal component from a reception signal is generated.

That is, the above operation algorithm applied to this embodiment leaves a component (that is, interference signal component in which u(t) correlates with e(t) in a signal output from the adaptive filter 152 while the algorithm can generate the filter-tap-coefficient series h(t) which does not leave a component having no correlation (that is, diffusion signal component) in a signal output from the adaptive filter 152.

According to the above operation algorithm, the adaptive filter 152 of this embodiment can extract only the interference component from a reception signal and output the component to the subtracter 153. The subtracter 153 can output a signal obtained by removing only an interference signal component from a reception signal (that is, diffusion signal according to the CDMA mode).

As described above, the interference-signal removing apparatus shown in Fig. 20 makes it possible to adaptively remove narrow-band interference signals from reception signals including wide-band diffusion signals diffused and modulated in accordance with the CDMA mode and the narrow-band interference signals by using the characteristic of the diffusion signal, prevent reception quality from deteriorating, and improve the reception quality.

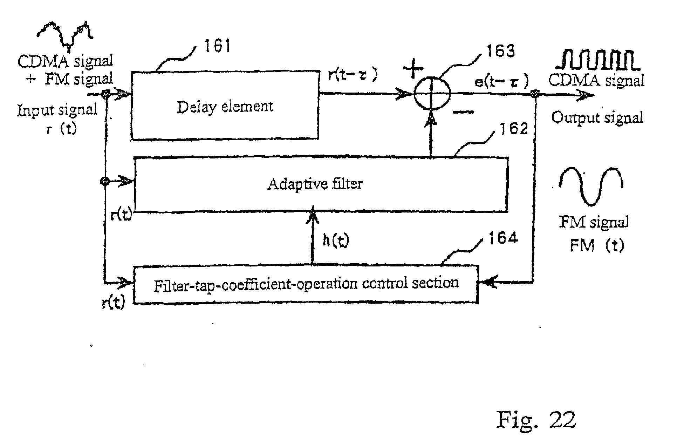

Though Fig. 20 shows a configuration for preventing a signal output from the subtracter 153 from being delayed, it is also possible to obtain the same advantage as the above mentioned by a configuration for delaying a reception signal input to the subtracter 163 by the delay element 161 while preventing a reception signal input to the adaptive filter 162 or filter-tap-coefficient-operation control section 164 from being delayed as shown in Fig. 22. The configuration shown in Fig. 22 is almost the same as the configuration shown in Fig. 20 except that the delay element 161 is set to the subtracter 163.

Moreover, it is possible to obtain the interference removal effect same as the above mentioned by using an algorithm other than the above LMS algorithm. For example, a specific update expression when using the RLS algorithm in the configuration shown in Fig. 20 will be described below. In the description below, objects corresponding to the above u(t), h(t), e(t), and d(t) are shown by the same symbols for convenience' sake of description.

For example, an n-row one-column vector constituted of the same component as u(t) shown by the above expression 1 is assumed as an input series u(t) and an n-row one-column vector constituted of n filter tap coefficients similarly to h(t) shown in the above expression 2 is assumed as a filter-tap series h(t).

Moreover, the error signal e(t) in RLS is shown by the following expression 7 as a signal corresponding to the error signal e(t) shown by the above expression 6. Moreover, $u^T(t)$ shows transposed u(t).

[Numerical Formula 7]

$$e(t)=d(t)-u^T(t)*h(t) \qquad \text{(Expression 7)}$$

In the case of this embodiment, the reception signal r(t) input to the subtracter 153 is used as d(t) and $u^T(t)$ *h(t) in the above expression 7 corresponds to an interference extraction signal output from the adaptive filter 152. That is, similarly to the case of using the above LMS algorithm, the error signal e(t) shown by the above expression 7 uses a signal output from the subtracter 153 and this is a feature of this embodiment. When the delay element 151 is not used similarly to the case of using the above LMS algorithm, the error signal e(t) converges to 0.

Moreover, by using a coefficient-error correlation matrix P(t) that is an n-row n-column matrix and a gain vector k(t) that is an n-row one-column vector, the update expression of RLS is shown by the following expressions 8 to 10.

[Numerical Formula 8]

$$h(t)=h(t-1)+k(t)*e(t) \qquad \text{(Expression 8)}$$

[Numerical Formula 9]

$$k(t)=\{P(t-1)*u(t)\}/\{1+u^T(t)*P(t-1)*u(t)] \qquad \text{(Expression 9)}$$

[Numerical Formula 10]

$$P(t)=P(t-1)-k(t)*u^T(t)*P(t-1) \qquad \text{(Expression 10)}$$

Moreover, the initial value h(0) of the above filter-tap-coefficient series h(t) uses a zero vector as shown by the expression 11 and the initial value P(0) of the above coefficient-error correlation matrix P(t) uses a matrix in which every diagonal element in which the number of rows coincides with the number of columns is a positive real number c and elements other than the diagonal element are 0 as shown by the expression 12. Symbol $h^T(0)$ denotes transposed h(0). Moreover, I in the expression 12 denotes an n-row n-column matrix in which every diagonal element in which the number of rows coincides with the number of columns is 1 and elements other than the diagonal element are 0.

[Numerical Formula 11]

$$h^T(0) = \{0, 0, 0, ..., 0\} \qquad \text{(Expression 11)}$$

[Numerical Formula 12]

$$P(0) = c * I = \begin{pmatrix} c0 \cdot \cdot 0 \\ 0 \cdot \cdot \cdot \cdot \\ \cdot \cdot c \cdot \cdot \\ \cdot \cdot \cdot \cdot 0 \\ 0 \cdot \cdot 0c \end{pmatrix} \qquad \ldots (\text{Expression } 12)$$

The filter-tap-coefficient-operation control section 154 updates filter-tap-coefficient series h(t) one by one in accordance with the above update expression of RLS and thereby, it is possible to make a signal output from the adaptive filter 152 slowly approach to an actual interference signal component similarly to the case of using the above LMS algorithm. Thus, it is possible to remove narrow-band interference signals from reception signals including wide-band diffusion signals diffused and modulated in accordance with the CDMA mode and the narrow-band interference signals.

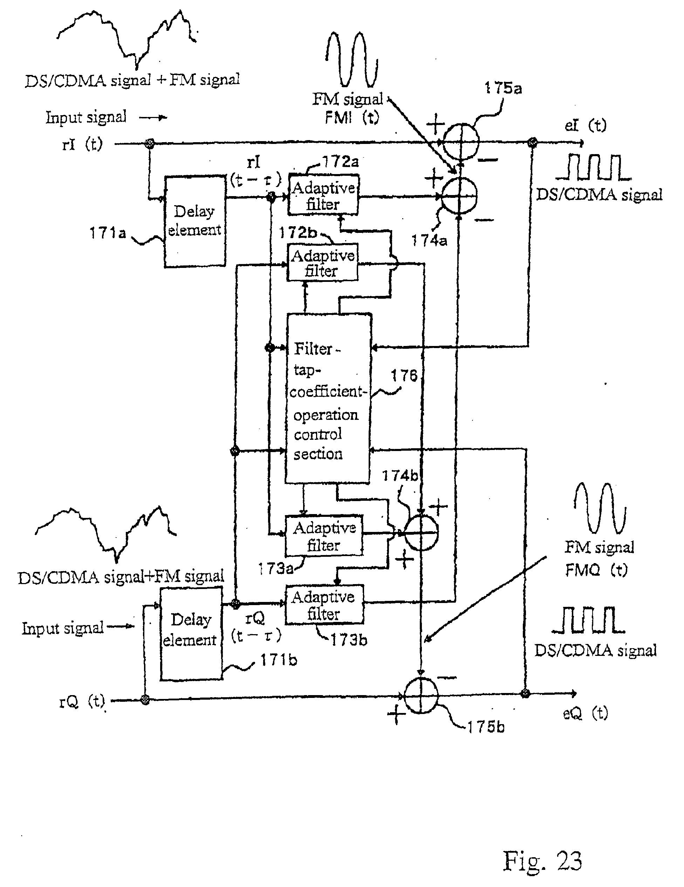

Fig. 23 shows an interference-signal removing apparatus for inputting I and Q components of reception signals including a CDMA signal (desired signal) and an FM signal (interference signal) and removing the FM signal from the I component rI(t) and the Q component rQ(t). In the case of the interference-signal removing apparatus, when removing the interference signals from the I and Q components of the reception signals including the diffusion signals diffused and modulated in accordance with the CDMA mode and the interference signals, time-difference means 171a and 171b provides a time difference for one chip of the diffusion signal between two signals obtained by dividing I component and between two signals obtained by dividing Q component, extraction means 172a, 172b, 173a, and 173b extract I and Q components from an interference signal component by using a signal component correlated between one reception signal constituted of I and Q components provided with the time difference and the other reception signal constituted of I and Q components as the interference signal component, and removal means 174a, 174b, 175a, and 175b remove I component of the extracted interference signal component from I component of the reception signal and Q component of the extracted interference signal component from Q component of the reception signal.

Specifically, the interference-signal removing apparatus shown in Fig. 23 is provided with a delay element 171a for delaying an I-phase signal (I component) orthogonally-detected from a reception signal, a delay element 171b for delaying a Q-phase signal (Q component) orthogonally-detected from the reception signal, four adaptive filters 172a, 172b, 173a, and 173b for extracting an interference signal component from I or Q component delayed in accordance with a tap-coefficient control signal output from a filter-tap-coefficient-operation control section 176 to be described later, an adder 174a for adding I component of the interference signal component, an adder 174b for adding Q component of the interference signal component, a subtracter 175a for removing I component of the interference signal component from I component of the reception signal, a subtracter 175b for removing Q component of the interference signal component from Q component of the reception signal, and a filter-tap-coefficient-operation control section 176 for outputting a tap-coefficient control signal according to signals output from the subtracters 175a and 175b and I and Q components of a delayed reception signal to the adaptive filters 172a, 172b, 173a, and 173b.

A configuration and operations of the circuit shown in Fig. 23 will be described below.

I component rI(t) and Q component rQ(t) orthogonally detected from a reception signal by a receiver are input to the circuit and the input signals rI(t) and rQ(t) include a wide-band diffusion signal diffused and modulated in accordance with the CDMA mode and an interference signal (e.g. FM modulation signal) according to a communication mode using a narrow band. In this case, similarly to the case of performing description by referring to Fig. 20, t denotes time, which is assumed as an integral discrete value using one-sample time as the minimum unit in the case of this embodiment.

The above I component rI(t) is first divided into two signals in which one signal is input to the delay element 171a while the other signal is input to the subtracter 175a. Moreover, the above Q component rQ(t) is first divided into two signals in which one signal is input to the delay element 171b while the other signal is input to the subtracter 175b.

Each of the delay elements 171a and 171b has a function for delaying an input signal by the time width for one chip of a diffusion signal or more and outputting the signal same as the delay element 151 shown in Fig 20 does. These two delay elements 171a and 171b provide the same delay time. Moreover, similarly to the case of performing description by referring to Fig. 20, specifically, the signal of I component output from the delay element 171a is shown as rI(t-τ) and the signal of Q component output from the delay element 171b is shown as rQ(t-τ). In this case, τ denotes a delay time provided from the delay elements 171a and 171b.

The signal rI(t-τ) output from the delay element 171a is input to two adaptive filters 172a and 173b and the filter-tap-coefficient-operation control section 176 while the signal rQ(t-τ) output from the delay element 171b is input to two adaptive filters 172b and 173b and the filter-tap-coefficient-operation control section 176.

The configuration of each of the adaptive filters 172a, 172b, 173a, and 173b is the same as that shown in Fig. 21. In this case, this embodiment is provided with four adaptive filters 172a, 172b, 173a, and 173b in order to perform the complex operation of I and Q phases. Specifically, this is because I and Q components of an interference signal component are included in I and Q components of a reception signal. Moreover, this embodiment uses two filter-tap-coefficient series hI(t) and hQ(t) of I and Q phases. In this case, hI(t) and hQ(t) are vectors.

Specifically, in the case of this embodiment, filter-tap-coefficient series hI(t) and hQ(t) for making it possible that the adaptive filter 172a can extract I component of an interference signal component from I component rI(t-τ) of an input reception signal, the adaptive filter 173a can extract Q component of the interference signal component from I component rI(t-τ) of the input reception signal, the adaptive filter 172b can extract Q component of the interference signal component from Q component rQ(t-τ) of the input reception signal, and the adaptive filter 173b can extract I component of the interference signal component from Q component rQ(t-τ) of the input reception signal are generated by the filter-tap-coefficient-operation control section 176 to be described later.

The adder 174a has a function for adding signals output from the adaptive filters 172a and 173b and outputting the addition result to the subtracter 175a. The addition result output to the subtracter 175a becomes the interference signal component in I component of a reception signal (that is, I component of the interference signal component) FMI (t). In the case of this embodiment, the adder 174a inverts positive and negative of a signal output from the adaptive filter 173b and performs the above addition. However, when inversion of positive and negative is performed by the above adaptive filter 173b or the filter-tap-coefficient-operation control section 176 to be described later, the adder 174a does not have to perform the above inversion of positive and negative.

The adder 174b has a function for adding signals output from the adaptive filters 172b and 172a and outputting the addition result to the subtracter 175b. The addition result output to the subtracter 175b becomes an interference signal component in Q component of a reception signal (that is, Q component of interference signal component) FMQ(t).

In this case, I component FMI(t) of the interference signal component output from the above adder 174a is shown by the following expression 13 and Q component FMQ(t) of the interference signal component output from the above adder 174b is shown by the following expression 14. In the expressions 13 and 14, uI(t) and uQ(t) are vectors and correspond to I and Q components of u(t) shown by the expression 1 in the description using Fig. 20.

[Numerical Formula 13]

$$FFMI(t)=\{hI(t)*uI(t)\}+\{-hQ(t)*uQ(t)\} \qquad ((\text{Expression 13})$$

[Numerical Formula 14]

$$FFQ(t)= \{hI(t)*uQ(t)\}+\{hQ(t)*uI(t)\} \qquad (\text{Expression 14})$$

The subtracter 175a has a function for inputting the input signal rI(t) of not-delayed I component and the output signal FMI(t) output from the adder 175a, subtracting the output signal FMI(t) from the input signal rI(t), and outputting the subtraction result eI(t).

Similarly, the subtracter 175b has a function for inputting the input signal rQ(t) of not-delayed Q component and the output signal FMQ(t) output from the adder 174b, subtracting the output signal FMQ(t) from the input signal rQ(t), and outputting the subtraction result eQ(t).

In this case, the above subtraction results eI(t) and eQ(t) are signals output from the interference-signal removing apparatus of this embodiment.

In the case of this embodiment, tap-coefficient control signals output from the filter-tap-coefficient-operation control section 176 to be described later are updated one by one and thereby, interference-wave extraction signals FMI(t) and FMQ(t) of the above I and Q components become the same signals as interference signals in I and Q components of a reception signal. Therefore, the above subtraction results eI(t) and eQ(t) become signals obtained by removing the interference signals from I and Q components of the reception signal, that is, diffusion signals according to the CDMA mode (ideally, only the diffusion signals).

The filter-tap-coefficient-operation control section 176 receives the signals rI(t-τ) and rQ(t-τ) from the delay elements 171a and 171b and the signals eI(t) and eQ(t) from the subtracters 175a and 175b. The section 176 has a function for computing tap-coefficient control signals for changing signals output from the adaptive filters 172a, 172b, 83, and 173b to the above interference signal components, and outputting them to the adaptive filters 172a, 172b, 173a, and 173b. This embodiment is set so that the same tap-coefficient control signals are output to the adaptive filters 172a and 172b while the same tap-coefficient control signals are output to the remaining adaptive filters 173a and 173b and thereby, the interference signal components FMI(t) and FMQ(t) shown by the above expressions 13 and 14 are generated.

The filter-tap-coefficient-operation control section 176 of this embodiment computes a tap-coefficient control signal by using the algorithm for complex operation of LMS shown in the description using Fig. 20. The update expressions of LMS in this algorithm are shown by the following expressions 15 and 16.

[Numerical Formula 15]

$$hI(t+1)=hI(t)+u^*(eI(t)^*uI(t)+eQ(t)^*uQ(t)) \qquad \text{(Expression 15)}$$

[Numerical Formula 16]

$$hQ(t+1)=hQ(t)+u^*(eQ(t)^*uI(t)-eI(t)^*uQ(t)) \qquad \text{(Expression 16)}$$

In the above expressions, hI(t) and hQ(t) denote filter-tap-coefficient series at the time t, $\mu$ denotes a step size parameter serving as a coefficient relating to convergence time and accuracy, and uI(t) and uQ(t) denote input signal series in shift registers of the adaptive filters 172a, 173a and shift registers in the adaptive filters 172b and 173b. Moreover, similarly to the case of performing description by referring to Fig. 20, eI(t) and eQ(t) use signals output from the subtracters 175a and 175b. uI(t) and uQ(t) denote vectors as described above.

Similarly to the case of performing description by referring to Fig. 20, this embodiment makes it possible to generate the filter-tap series hI(t) and hQ(t) capable of removing interference signal components having a comparatively high correlation each other without removing diffusion signal components because they are not correlated with each other.

Moreover, because this embodiment considers I and Q components when computing the filter-tap-coefficient series hI(t) and hQ(t), it is possible to further improve the accuracy of interference removal.

As described above, the interference-signal removing apparatus shown in Fig. 23 can remove interference signals from I and Q components of reception signals including diffusion signals diffused and modulated in accordance with the CDMA mode and the interference signals by using the characteristic of the diffusion signal and thereby, it is possible to prevent reception quality from deteriorating and improve the reception quality.

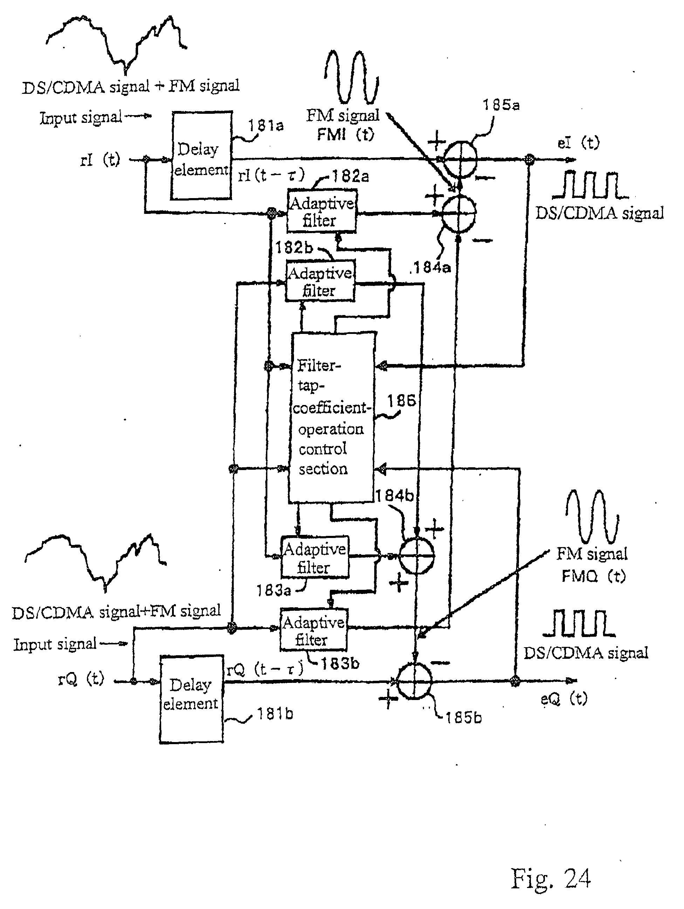

Similarly to the case of performing description by referring to Fig. 20, Fig. 23 shows a configuration for preventing signals output from the subtracters 175a and 175b from delaying. However, as shown in Fig. 24, for example, it is possible to obtain the same advantage as the above by a configuration for delaying reception signals input to subtracters 185a and 185b by delay elements 181a and 181b while preventing reception signals input to adaptive filters 182a, 182b, 183a, and 183b and a filter-tap-coefficient-operation control section 186 from delaying. In this case, the configuration shown in Fig. 24 is almost the same as the configuration shown in Fig. 23 except that the delay elements 181a and 181b are provided for the subtracters 185a and 185b and adders 184a and 184b are also provided together with the above components.

Moreover, similarly to the case of performing description by referring to Fig. 20, it is possible to obtain the interference removal effect same as the above described by using an algorithm other than the above-described LMS algorithm for complex operation. As an example, the case of using the RLS algorithm for complex operation for the configuration shown in Fig. 23 will be described below. For convenience' sake of description, objects corresponding to the above uI(t), uQ(t), hI(t), hQ(t), eQ(t), rI(t), and rQ(t) are provided with same symbols.

In the case of the RLS algorithm for complex operation, all parameters of u(t), h(t), e(t), k(t), and P(t) shown by the above expressions 7 to 10 are constituted of complex-number elements. In this case, when assuming $\gamma$ and $\omega$ as real numbers and using j as a symbol for showing an imaginary-number part, an optional complex-number element is shown as $(\gamma + j\omega)$.

Moreover, in the case of the RLS algorithm for complex operation, the sequential updating described by referring to Fig. 20 is realized in complex operation by separating the real-number part from the imaginary-number part of each of the above parameters and using the real-number part as an I-component parameter and the imaginary-number part as a Q-component parameter.

Specifically, in the case of this embodiment, the processing for removing interference signal components from the I component rI(t) and Q component rQ(t) of a reception signal is performed by assuming the real-number part of u(t) as uI(t) and the imaginary-number part of u(t) as uQ(t), the real-number part of h(t) as hI(t) and the imaginary-number part of h(t) as hQ(t), and the real-number part of e(t) as eI(t) and the imaginary-number part of e(t) as eQ(t).

As described above, also when using the RLS algorithm for complex operation, it is possible to remove interference signals from I and Q components of reception signals including diffusion signals diffused and modulated in accordance with the CDMA mode and the interference signals similarly to the case of using the above LMS algorithm for complex operation.

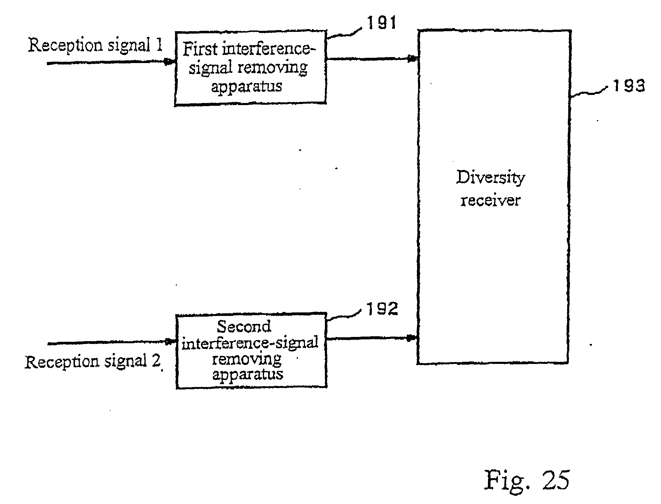

Moreover, a reception system for mobile communication generally uses a diversity receiver. For example, a diversity receiver 193 shown in Fig. 25 is operated under an environment in which interference signals may be present by setting interference-signal removing apparatuses 191 and 192 into branches of the diversity receiver 193.

Specifically, the diversity reception system shown in Fig. 25 is constituted of the diversity receiver 193 having two branches and two interference-signal removing apparatuses 191 and 192 for removing interference signals from signals of these two branches. Signals received through different antennas corresponding to the branches one to one are input as branch signals.

The first interference-signal removing apparatus 191 is set to the input terminal of the first branch of the diversity receiver 193, which removes interference signals from reception signals 1 input to the first branch and outputs the interference-removed reception signals to the input terminal.

Moreover, the second interference-signal removing apparatus 192 is set to the input terminal of the second branch of the diversity receiver 193, which removes interference signals from reception signals 2 input to the second branch and outputs the interference-removed reception signals 2 to the input terminal.

The diversity receiver 193 selectively receives either of two types of signals (reception signals 1 and reception signals 2) in accordance with a result of comparing magnitudes of signal levels between the reception signals 1 input through the input terminal of the first branch and the reception signals 2 input through the input terminal of the second branch or synthesizes the two types of reception signals at a proper ratio and receives the two types of reception signals according to the synthesis result. By performing the above diversity reception, it is possible to assure a high reception quality even if the interference such as fading occurs in either of two types of reception signals.

Then, the state of removing interference by the above conventional interference-signal removing apparatus is specifically described below.

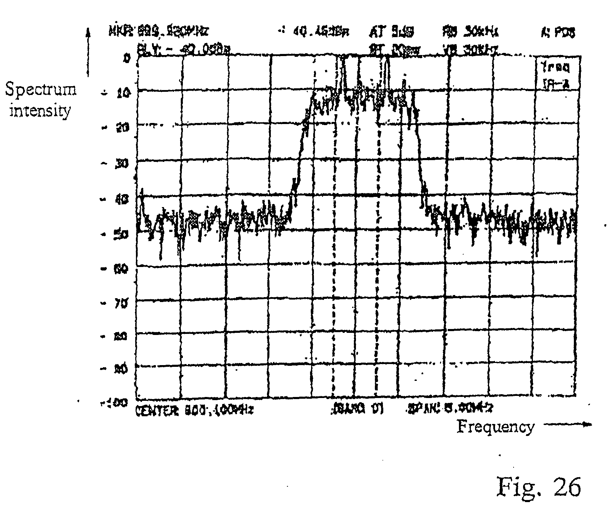

Fig. 26 shows a spectrum of a reception signal before interference is removed. In this case, a signal in which FM signals of two waves interfere with a CDMA signal is shown as the reception signal. Abscissas of graphs in Figs. 26, 27, and 28 respectively denote frequency (MHz) and ordinates of them respectively denote spectrum intensity.

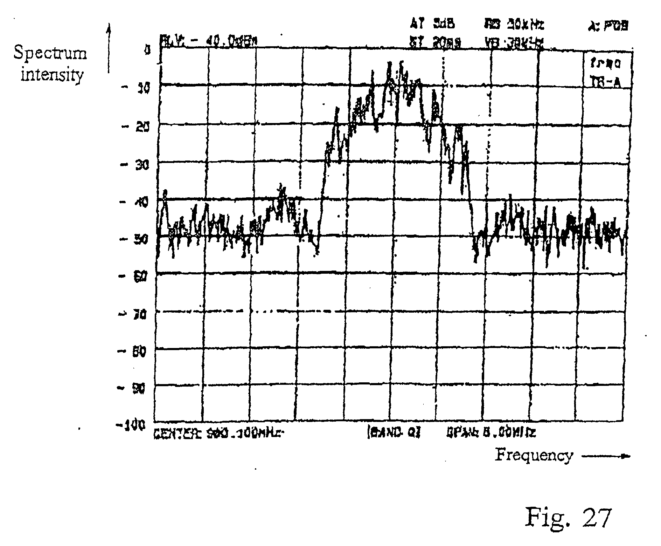

Moreover, Fig. 27 shows a spectrum of an output signal (output from an interference-signal removing apparatus) immediately after the reception signal shown in Fig. 26 is input to the interference-signal removing apparatus, for example, shown in Fig. 20 and interference signals (in this case, FM signals of two waves) are removed from the reception signal by the interference-signal removing apparatus (immediately after the interference-signal removal operation is started). As shown in Fig. 27, it is found that the frequency component of a CDMA signal located nearby the frequency of an interference signal is also removed from a signal output from the interference-signal removing apparatus immediately after start of interference-signal removal. In this case, the above trouble occurs because the CDMA signal is extracted simultaneously when an adaptive filter extracts interference signals from reception signals and the CDMA component is also removed simultaneously with removal of interference signals. This phenomenon always occurs for the adaptive-filter mode for extracting and removing an interference-signal component from a reception signal independently of the magnitude of interference-signal power. As a result, a problem occurs that the bit error ratio of an interference-removed reception signal is deteriorated.

Moreover, the above conventional interference-signal removing apparatus has a problem that when continuing interference-signal removal after start of it, CDMA-signal components in reception signals are also gradually attenuated and the attenuation progresses as time passes.

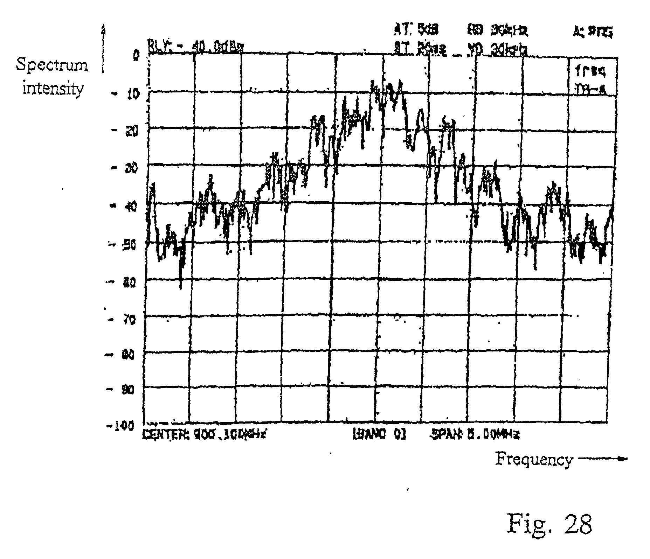

Specifically, Fig. 28 shows a spectrum of an output signal (output from an interference-signal removing apparatus) when interference-signal removal is continued for some time after the state shown in Fig. 27. As shown in Fig. 28, when some time passes after start of the interference-signal removal, the CDMA-signal component to be left in the output signal is greatly attenuated, the spectrum is disordered, and a band expands.

Thus, a conventional interference-signal removing apparatus has a function for adaptively removing narrow-band interference signals but it has a problem of gradually removing CDMA signals that are desired signals in accordance with elapse of time.

In this case, it is considered that a CDMA signal is extracted simultaneously when estimating an interference signal as a cause of the above trouble. That is, a CDMA-signal component which originally has no correlation because it is provided with a time difference and which must not be estimated locally has a correlation due to interference between codes or the like by the influence of a band-restriction filter and is estimated as an interference signal. Therefore, a problem resultantly occurs that the bit error ratio of an interference-removed reception signal is deteriorated because the spectrum is disordered and the band expands. This phenomenon always occurs by operating an interference-signal removing apparatus for a long time independently of presence or absence of an interference signal and more easily occurs as the power of the CDMA-signal component increases. Therefore, the phenomenon remarkably occurs because the CDMA power relatively increases through AGC (Automatic Gain Control) under an environment in which no interference signal is present.

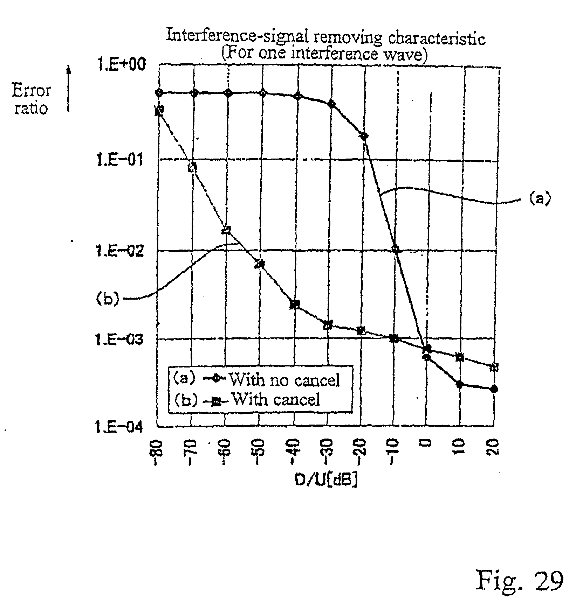

Moreover, Fig. 29 shows characteristics of interference signal removal when interference is removed by the above conventional interference-signal removing apparatus. Fig. 29 shows a state in which bit error ratios (BER) of a reception signal are changed, in which Fig. 29a shows a characteristic when interference is not removed by the interference-signal removing apparatus (when there is no cancel) and Fig. 29b shows a characteristic when interference is removed by the interference-signal removing apparatus (when there is a cancel).

Moreover, Fig. 29 shows cases of using a CDMA signal as a wide-band desired signal and an FSK (Frequency Shift Keying) signal as a narrow-band interference signal and a case in which a interference signal is one wave. Moreover, the abscissa of the graph in Fig. 29 denotes D/U {(power of desired input signal)/(power of narrow-band interference signal) per interference signal [dB] and the ordinate denotes bit error ratio of a receiver.

As shown in Fig. 29, when D/U is comparatively small (that is, when the power of a narrow-band interference signal is larger than that of a wide-band desired signal), it is possible to improve the characteristic of a bit error ratio by removing interference by an interference-signal removing apparatus. However, when D/U is comparatively large (that is, when the power of a narrow-band interference signal is smaller than that of a wide-band desired signal), the characteristic of the bit error ratio is rather deteriorated by removing interference by the interference-signal removing apparatus.

A reason same as the above is considered for the above deterioration. That is, it is considered that the interference-signal removing apparatus extracts not only an interference signal but also the frequency component of a wide-band desired signal when removing the above extraction result from reception signals. Moreover, it is considered that when removing no narrow-band interference signal, the characteristic is improved by the interference-signal suppression effect, compared to the case of removing narrow-band interference signals.

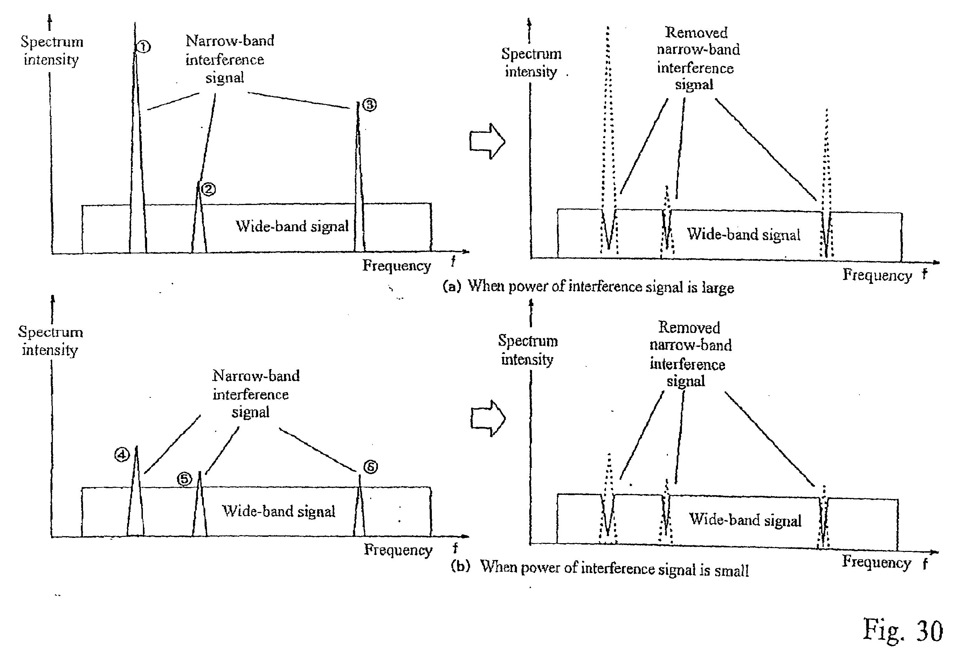

Figs. 30a and 30b show states of removing narrow-band interference signals from reception signals including wide-band signals and the narrow-band interference signals by the above conventional interference-signal removing apparatus.

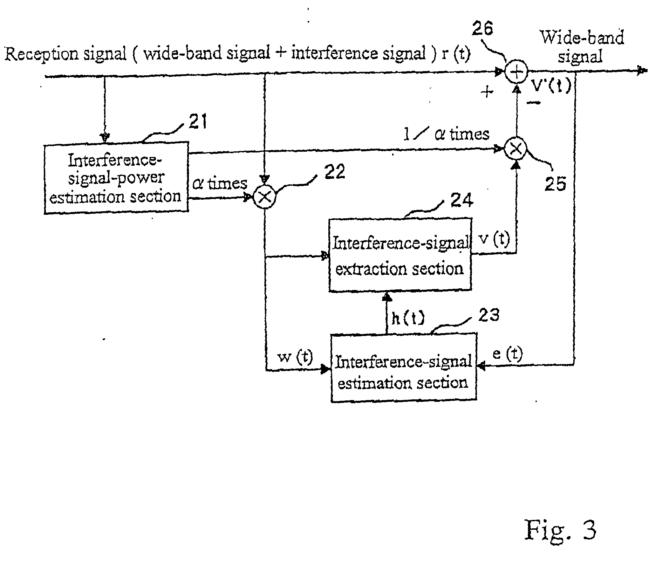

Specifically, Fig. 30a shows a state in which the power of a certain narrow-band interference signal is large enough compared to that of a wide-band signal (for example, interference signal shown by ① or ③ in Fig. 3a). In this case, it is possible to improve the reception quality by removing interference as described above.

Fig. 30a shows three signals ① , ② , and ③ interfering with a wide-band signal, in which the left graph shows the state of a reception signal before interference is removed and the right graph shows the state of an interference-removed reception signal. Moreover,, abscissas of these graphs respectively denote frequency and ordinates of then respectively denote spectrum intensity.

Moreover, Fig. 30b shows a case in which the power of each narrow-band signal is equal to (or smaller than) that of a wide-band signal. In this case, even the frequency component of a wide-band signal is extracted and removed together with a narrow-band signal. Therefore, when a signal output from an interference-signal removing apparatus is demodulated by a rear-stage circuit (of the interference-signal removing apparatus), deterioration of reception quality increases to a value that cannot be ignored.

Therefore, for the case shown in Fig. 30b, it can be said that removing no interference rather improves the reception quality in accordance with the interference-signal suppression effect that is also the property of a CDMA signal.

Moreover, Fig. 30b shows three signals ④ , ⑤ , and ⑥ interfering with a wide-band signal, in which the left graph shows the state of a reception signal before interference is removed and the right graph shows the state of an interference-removed reception signal. Moreover, abscissas of these graphs respectively denote frequency and ordinates of them respectively denote spectrum intensity.

Moreover, in the case of the interference-signal removing apparatuses, for example, shown in Figs. 17 and 20, operation results (h(t)) up to the last time are always accumulated every operation of the next-time filter-tap-coefficient series (h+1) shown in the above expression 5 because a filter-tap-coefficient series h(t) is updated by using the adaptive algorithm shown by the above expression 5. Therefore, in the case of the above interference-signal removing apparatus, even the signal component of a wide-band signal is extracted and even some of the wide-band signals may be removed due to interference between codes by, for example, a band restriction filter. Also in this case, deterioration of reception quality increases to a value which cannot be ignored in the demodulation by a receiver similarly to the above described.

As described above, the above conventional general interference-signal removing apparatus using a general adaptive algorithm shows the interference-signal removal characteristic shown in Fig. 29, for example, that is, it has a disadvantage that the characteristic of reception quality may be deteriorated when the power of a narrow-band signal becomes smaller than that of a wide-band signal compared to a case in which interference is not removed.

Specifically, in the case of a communication mode currently considered, reception quality may be rather deteriorated by using a receiver in which the above conventional interference-signal removing apparatus is built when the CDMA mode is used together with the TDMA mode or the CDMA mode is used together with the FDMA mode and no interference signal is included in reception signals. Moreover, a problem may occur that the number of mobile-station systems (number of users) which can be housed by a base-station system is decreased and a talking area is decreased.

Moreover, when a diversity receiver in which the above interference-signal removing apparatus is built is used as a receiver, problems same as the above mentioned may occur.

The present invention is made to solve the above conventional problems and its object is to provide an interference-signal removing apparatus which suppresses that even a desired signal is removed and makes it possible to improve the quality of an interference-removed input signal by removing only interference signals respectively having a comparatively-high level when removing narrow-band interference signals from input signals including wide-band signals and the narrow-band interference signals.

To achieve the above object, an interference-signal removing apparatus of the present invention removes only interference signals having level exceeding a predetermined threshold when removing narrow-band interference signals from input signals including wide-band desired signals and the narrow-band interference signals.

Therefore, because only interference signals having levels exceeding a predetermined threshold are removed from input signals but interference is not removed from interference signals having levels equal to or lower than the threshold, it is possible to suppress that even a desired signal is removed and improve the quality of an interference-removed input signal by removing only interference signals respectively having a comparatively-high level from input signals.

For example, when a CDMA signal is used as a wide-band desired signal, it is possible to suppress that even the CDMA-signal component is removed by removing interference signals having levels exceeding a predetermined threshold from reception signals when removing interference signals from signals (including CDMA signals and narrow-band interference signals) received by a receiver and thereby, improve the characteristic of the bit error ratio of an interference-removed reception signal, compared to a conventional case.

That is, because (diffused) signals according to the spectrum diffusion mode such as the CDMA mode have a high interference resistance, it is unnecessary to extremely remove narrow-band interference signals from the (diffused) signals and it is rather preferable to attenuate the power of the narrow-band interference signals up to the same level as the signal power of diffused desired waves (such as CDMA signals). Therefore, by removing only interference signals having a high level at which the component of a CDMA signal or the like is not removed, it is generally possible to improve a bit error ratio after interference is removed because removal of the CDMA-signal component is suppressed even if interference-signal components are slightly left in reception signals.

In this case, it is permitted to use any signal as a wide-band desired signal. For example, it is possible to use a signal diffused in accordance with the CDMA mode.

Moreover, it is permitted to use any signal as a narrow-band interference signal. For example, it is possible to use an FM or FSK signal.

Furthermore, it is permitted to use any signal as an input signal. For example, it is possible to use a reception signal as an input signal.

Furthermore, it is permitted to use any value as a predetermined threshold. For example, to remove an interference signal having a level exceeding the predetermined threshold from input signals, it is preferable to use a value capable of suppressing removal of desired signals at a degree effective for practical use.

Furthermore, it is permitted to use any level as the above level. For example, it is possible to use a level of power or amplitude.

Furthermore, an interference-signal removing apparatus of the present invention removes narrow-band signals from input signals including wide-band desired signals and the narrow-band interference signals as described below.

That is, input-signal control means restricts effective word lengths of digital values of input signals, interference-signal estimation means estimates interference signals included in input signals in accordance with input signals whose effective word lengths are restricted, interference-signal extraction means extracts interference signals from input signals in accordance with an estimation result by the interference-signal estimation means, and interference-signal removal means removes interference signals from input signals.

Therefore, by restricting effective word lengths of input signals used to estimate interference signals included in input signals, it is possible to estimate only interference signals respectively having a comparatively-high level and remove them from input signals. Thereby, it is possible to suppress that even desired signals are removed and improve the quality of an interference-removed input signal.

In this case, restricting the effective word length of the digital value of an input signal corresponds to decreasing the digital value in accordance with the degree of the restriction, that is, corresponds to lowering the level of the input signal.

Moreover, any degree can be used for the degree of restricting a word length. For example, it is preferable to use a degree capable of suppressing removal of desired signals at a degree effective for practical use.

Furthermore, it is permitted for interference-signal extraction means to directly extract interference signals from input signals or extract interference signals from input signals whose effective word lengths are restricted.

For example, in the case of an interference-signal removing apparatus of the present invention, interference-signal extraction means extracts interference signals from input signals whose effective word lengths are restricted.

Moreover, an interference-signal removing apparatus of the present invention removes narrow-band interference signals from input signals including wide-band desired signals and the narrow-band interference signals as described below.

That is, input-signal control means adds noises to input signals, interference-signal estimation means estimates interference signals included in input signals in accordance with the noise-added input signals, interference-signal extraction means extracts interference signals from input signals in accordance with an estimation result of the interference-signal estimation means, and interference-signal removal means removes extracted interference signals from input signals.

Therefore, by adding noises to input signals used to estimate interference signals included in input signals, it is possible to estimate only interference signals respectively having a comparatively-high level and remove them from input signals. Thereby, it is possible to suppress that even desired signals are removed and improve the quality of interference-removed input signals.

In this case, by adding noises to input signals, it is possible to prevent interference signals respectively having a comparatively-low level included in the input signals from being estimated in accordance with the intensity of the noises by burying the interference signal in the noises.

Moreover, it is permitted to use any level of noises to be added to input signals. For example, it is preferable to use a level capable of suppressing removal of desired signals at a degree effective for practical use.

Furthermore, it is permitted for interference-signal extraction means to directly extract interference signals from input signals or extract interference signals from noise-added input signals.

For example, in the case of an interference-signal removing apparatus of the present invention, interference-signal extraction means extracts interference signals from noise-added input signals.

Moreover, an interference-signal removing apparatus of the present invention removes narrow-band interference signals from input signals including wide-band desired signals and the narrow-band interference signals as described below.

That is, input-signal control means multiplies input signals by a control coefficient of less than 1, interference-signal estimation means estimates interference signals included in input signals in accordance with the input signals multiplied by the control coefficient, interference-signal extraction means extracts interference signals from input signals in accordance with an estimation result of the interference-signal estimation means, and interference-signal removal means removes interference signals from input signals.

Therefore, by multiplying input signals used to estimate interference signals included in input signals by a control coefficient of less than 1, it is possible to estimate only interference signals respectively having a comparatively-high level and remove them from input signals. Thereby, it is possible to suppress that even desired signals are removed and improve the quality of interference-removed input signals.

In this case, by multiplying input signals by a control coefficient of less than 1, it is possible to lower levels of the input signals in accordance with the value of the control coefficient.

Moreover, it is permitted to use any value as the value of the control coefficient and it is preferable to use a value capable of suppressing removal of desired signals at a degree effective for practical use.

Furthermore, it is permitted for interference-signal extraction means to directly extract interference signals from input signals or extract interference signals from input signals multiplied by a control coefficient.

For example, in the case of an interference-signal removing apparatus of the present invention, interference-signal extraction means extracts interference signals from input signals multiplied by a control coefficient.

Moreover, in the case of an interference-signal removing apparatus of the present invention, input-signal control means has interference-signal-level estimation means for estimating levels of interference signals included in input signals to control input signals in accordance with estimated interference-signal levels.

In this case, to control input signals, there are a method of restricting effective word lengths of digital values of input signals, a method of adding noises to input signals, and a method of multiplying input signals by a control coefficient of less than 1.

Moreover, it is permitted to use any level at the level of an interference signal. For example, it is possible to use a level of power or amplitude.

Furthermore, interference-signal removing apparatuses of the present invention having various configurations described above can be preferably applied to a base-station system and a mobile-station systems provided for a mobile communication system and moreover, can be applied to diversity reception systems for performing diversity reception.

For example, a base-station system of a mobile communication system of the present invention has one of the above-describe interference-signal removing apparatuses to input signals radio-received from a mobile-station system to the interference-signal removing apparatus and remove interference signals included in the input signals by the interference-signal removing apparatus. Moreover, an interference-signal removing apparatus of the present invention can be applied to a mobile-station system or a relay (amplification) station system.

In this case, it is permitted for a mobile communication system to use any system such as a portable telephone system or a simplified portable telephone system (PHS).

Furthermore, a diversity reception system of the present invention has one of the above interference-signal removing apparatuses on at least one branch to make it possible to input the signal of the at least one branch to the interference-signal removing apparatus and remove interference signals from the signal by the interference-signal removing apparatus.

The above diversity reception system is provided with antennas equal to the number of branches and a signal received by each antenna is used as the signal of each branch.

In this case, it is permitted that any number of branches is used for the diversity reception system.

Moreover, it is permitted to use any number of branches for which an interference-signal removing apparatus is provided. For example, one interference-signal removing apparatus is provided for each branch. Specifically, it is permitted that one interference-signal removing apparatus is set to every branch provided for a diversity reception system or one interference-signal removing apparatus is set to each of some of branches provided for a diversity reception system.

Furthermore, it is permitted that an interference-signal removing apparatus provided for each branch always performs the operation for removing interference signals or the operation for removing interference signals is turned on/off.

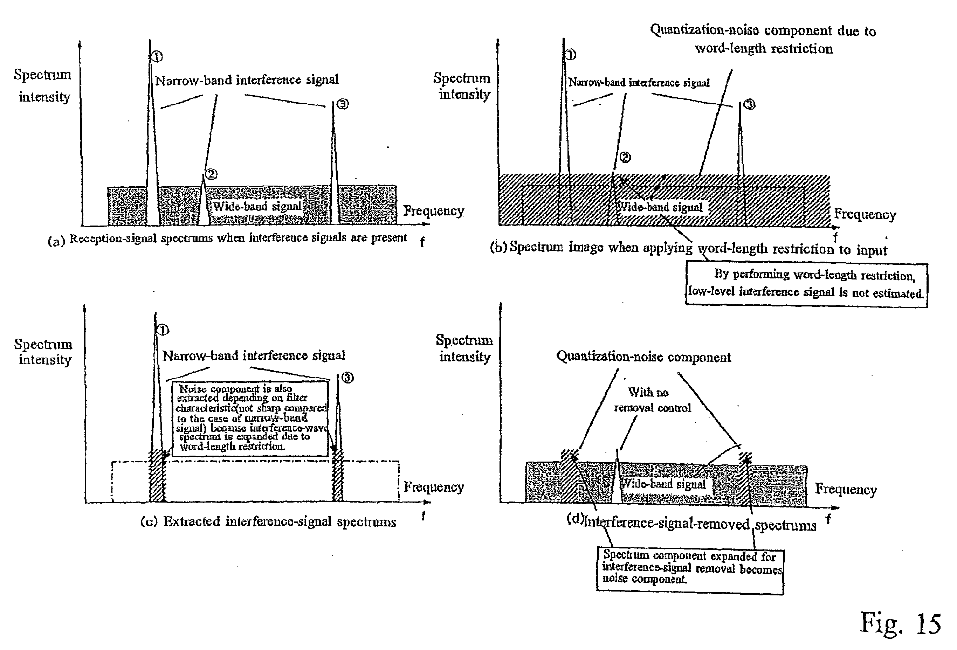

Figs. 15a to 15d show cases in which interference-signal extraction means extracts interference signals from input signals whose effective word lengths are restricted as states in which narrow-band signals are removed from reception signals including wide-band signals and the narrow-band interference signals by the above interference-signal removing apparatus of the present invention.

Abscissas of the graphs in Figs. 15a to 15d respectively denote frequency and ordinates of them respectively denote spectrum intensity.

Specifically, Fig. 15a shows spectrums of reception signals including wide-band signals and narrow-band interference signals, in which two narrow-band interference signals ① and ③ respectively having power much larger than that of a wide-band signal and one narrow-band interference signal ② having power almost equal to that of the wide-band signal are shown.

Fig. 15b shows spectrum images when effective word lengths of reception signals are restricted, in which the quantization-noise component due to word-length restriction is hatched. As shown in Fig. 15b, because the interference signal ② having a comparatively low level is buried in noises due to word restriction, it is not estimated as an interference signal but only the interference signals ① and ③ respectively having a comparatively high level are estimated as interference signals by interference-signal estimation means.

Fig. 15c shows spectrums of reception signals extracted by interference-signal extraction means from input signals whose effective word lengths are restricted in accordance with an estimation result of the interference-signal estimation means. As shown in Fig. 15c, only the interference signals ① and ③ respectively having a comparatively high level are extracted. Moreover, as shown in Fig. 15c, spectrums of interference signals are expanded by the effective word length restriction and the hatched noise components are also extracted in accordance with the filter characteristic that is not sharp compared to the case of a narrow-band interference signal.

Fig. 15d shows spectrums of reception signals after extracted interference signal are removed. As shown in Fig. 15d, interference is not removed from the interference signal ② having a comparatively low level but interference is removed from only the interference signals ① and ③ respectively having a comparatively high level. As shown in Fig. 15d, an expanded spectrum is left in one direction as a portion that is not removed by a filter when interference is extracted and it becomes hatched quantization-noise components.

Thus, by using reception signals whose effective word lengths are restricted instead of directly using the reception signals shown in Fig. 15a, it is possible to prevent interference-signal components from being estimated by burying originally-necessary wide-band signals and the interference signal ② at a low level that is unnecessary to remove as an interference signal to a noise level or lower. Thereby, since, as shown in Fig. 15c, the wide-band signal component is not extracted when the interference signals are extracted, as shown in Fig. 15d, wide-band signals are not removed when interference signals are removed but only components extracted together with interference signals are left as noise components.

These noise components can be completely removed in accordance with, for example, the interference-signal suppression effect of CDMA. Moreover, for example, noise components may be left out of the interference-signal band when interference signals are extracted. However, when a finite impulse response (FIR) filter generally used as means for extracting interference signals has a sufficient number of stages, there is no problem because it is possible to completely suppress noise components.

Though a case is described above in which the effective word length of a reception signal is restricted, it is also possible to obtain the same advantage from a case of adding noises to reception signals or a case of multiplying reception signals by a control coefficient of less than 1.

As described above, by using the interference removing method used for this embodiment for performing interference removal corresponding to the level of the power or the like of an interference signal, it is possible to selectively extract and suppress only interference signals having a large power and moreover, prevent wide-band-signal components from being extracted simultaneously with extraction of narrow-band interference signals. Moreover, because the above mentioned and suppression of interference signals having a small power are possible in accordance with the interference-signal suppression effect of CDMA, it is generally possible to minimize characteristic deterioration by an interference-signal removing apparatus.

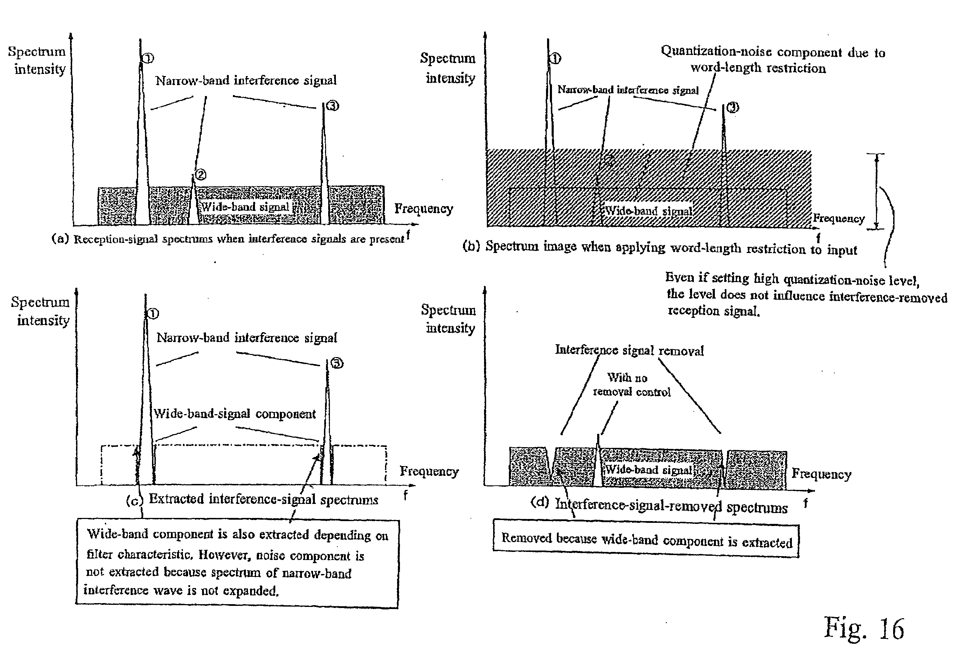

Figs. 16a to 16d show cases in which interference-signal extraction means directly extracts interference signals from input signals as states in which narrow-band interference signals are removed from reception signals including wide-band signals and the narrow-band interference signals by the above interference-signal removing apparatus of the present invention.

Abscissas of the graphs in Figs. 16a to 16d respectively denote frequency and ordinates of them respectively denote spectrum intensity.

Specifically, Fig. 16a shows spectrums of reception signals including wide-band signals and narrow-band interference signals, in which two narrow-band interference signals ① and ③ respectively having the power much larger than that of a wide-band signal and one narrow-band interference signal ② having the power almost equal to that of the wide-band signal are shown.

Fig. 16b shows spectrum images of reception signals whose effective word lengths are restricted and the quantization-noise component due to word length restriction is hatched. In this case, Fig. 16b shows a case of setting the quantization-noise level to a value higher than the case shown in Fig. 15b. As shown in Fig. 16b, the interference signal ② having a comparatively low level is not estimated as an interference signal by interference-signal estimation means because the signal ② is buried in noises due to word-length restriction but only the interference signals ① and ③ respectively having a comparatively high level are estimated as interference signals by the interference-signal estimation means.

Fig. 16c shows spectrums of interference signals directly extracted from input signals by interference-signal extraction means in accordance with an estimation result of the interference-signal estimation means. As shown in Fig. 16c, only the interference signals ① and ③ respectively having a comparatively high level are extracted. Moreover, as shown in Fig. 16c, wide-band-signal components are slightly extracted depending on the filter characteristic. However, spectrums of narrow-band interference signals are not expanded, noise components are not extracted. Therefore, as shown in Fig. 16b, even if the quantization-noise level is set to a high value, it does not influence interference-removed reception signals.

Fig. 16d shows a spectrum of reception signals after removing extracted interference signals. As shown in Fig. 16d, interference is not removed from the interference signal ② having a comparatively low level but interference is removed from only the interference signals ① and ③ respectively having a comparatively high level and interference signals are removed. Moreover, as shown in Fig. 16d, wide-band signals are slightly removed because wide-band-signal components are extracted from the frequency positions of the interference signals ① and ③ respectively having a comparatively high level and frequency positions nearby the former frequency positions.

Thus, by using reception signals whose effective word lengths are restricted instead of directly using the reception signals shown in Fig. 16a, it is possible to prevent interference-signal components from being estimated for originally necessary wide-band signals shown in Fig. 16b and the interference signal ② having a low level and unnecessary to remove as an interference signal by burying the wide-band signals and the interference signal ② to a noise level or lower. Moreover, because this example directly uses reception signals when extracting interference signals, wide-band-signal components are extracted simultaneously with extraction of interference signals as shown in Fig. 16c and the wide-band-signal components are also removed when the interference signals are removed as shown in Fig. 16d. Moreover, interference signals including the interference signal ② having a low level are directly left.

Wide-band-signal components are removed for the case shown in Fig. 16 compared to the case shown in Fig. 15 and thereby, characteristics may be deteriorated. However, when the noise level is set to a high value as shown in Fig. 16b, interference signals are extracted from reception signals whose effective word lengths are restricted, and thereby characteristic deterioration caused by noise components remaining when interference signals are extracted increases, it is more effective to extract directly extract interference signals from reception signals like the above example.

That is, in the case of the above example, because interference signals are extracted from reception signals whose effective word lengths are not restricted after estimating the interference signals, influences on wide-band-signal components due to interference removal may slightly occur. However, as shown in Fig. 15, because quantization-noise components are not included in interference-removed reception signals when removing interference signals, it is possible to set a noise level according to effective-word-length restriction to a high value while preventing characteristic deterioration.

A case of restricting the effective word length of a reception signal is described above. However, also when adding noises to reception signals or multiplying reception signals by a control coefficient of less than 1, the same advantage can be obtained.

As described above, by using the interference removing method of this example for performing interference removal corresponding to the level of the power or the like of an interference signal, it is possible to selectively extract and suppress only interference signals having a large power. Moreover, because the above mentioned and suppression of interference signals having a small power can be made in accordance with the interference-signal suppression effect of CDMA, it is possible to minimize characteristic deterioration by an interference-signal removing apparatus.

The invention will be further described by way of example with reference to the accompanying drawings, in which:-

Fig. 1 is an illustration showing a configuration of an interference-signal removing apparatus of a first embodiment of the present invention;

Fig. 2 is an illustration showing a configuration of an interference-signal removing apparatus of a second embodiment of the present invention;

Fig. 3 is an illustration showing a configuration of an interference-signal removing apparatus of a third embodiment of the present invention;

Fig. 4 is an illustration showing a configuration of an interference-signal removing apparatus of a fourth embodiment of the present invention;

Fig. 5 is an illustration showing a configuration of an interference-signal removing apparatus of a fifth embodiment of the present invention;

Fig. 6 is an illustration showing a configuration of an interference-signal removing apparatus of a sixth embodiment of the present invention;

Fig. 7 is an illustration showing a configuration of an interference-signal removing apparatus of a seventh embodiment of the present invention;

Fig. 8 is an illustration showing a configuration of an interference-signal removing apparatus of an eighth embodiment of the present invention;

Fig. 9 is an illustration showing a configuration of a diversity reception system of a ninth embodiment of the present invention;

Fig. 10 is an illustration showing a configuration of a diversity reception system of a tenth embodiment of the present invention;

Fig. 11 is an illustration showing a configuration of a diversity reception system of an eleventh embodiment of the present invention;

Fig. 12 is an illustration showing a configuration of a diversity reception system of a twelfth embodiment of the present invention;

Fig. 13 is an illustration showing a configuration of a diversity reception system of a thirteenth embodiment of the present invention;

Fig. 14 is an illustration showing a configuration of a diversity reception system of a fourteenth embodiment of the present invention;

Figs. 15a to 15d are illustrations showing states of removing narrow-band interference signals from reception signals including wide-band signals and the narrow-band interference signals by using an interference-signal removing apparatus of the present invention;

Figs. 16a to 16d are illustrations showing states of removing narrow-band interference signals from reception signals including wide-band signals and the narrow-band interference signals by using an interference-signal removing apparatus of the present invention;

Fig. 17 is an illustration showing a configuration of a conventional interference-signal removing apparatus;

Fig. 18 is an illustration for explaining a diffusion code series;

Fig. 19 is an illustration showing spectrums of reception signals including wide-band signals and narrow-band interference signals conforming to the CDMA mode;

Fig. 20 is an illustration showing an interference-signal removing apparatus;

Fig. 21 is an illustration showing a configuration of an adaptive filter;

Fig. 22 is an illustration showing an interference-signal removing apparatus;

Fig. 23 is an illustration showing an interference-signal removing apparatus;

Fig. 24 is an illustration showing an interference-signal removing apparatus;

Fig. 25 is an illustration showing a configuration of a diversity reception system;

Fig. 26 is an illustration showing a spectrum of a reception signal in which FM signals of two waves interfere with a CDMA signal;

Fig. 27 is an illustration showing a spectrum of a signal output from an interference-signal removing apparatus immediately after start of interference signal removal;

Fig. 28 is an illustration showing a spectrum of a signal output from an interference-signal removing apparatus when a certain time passes after start of interference signal removal;

Fig. 29 is an illustration showing interference-signal removal characteristics; and

Figs. 30a and 30b are illustrations showing states of removing narrow-band interference signals from reception signals including wide-band signals and the narrow-band interference signals by using a conventional interference-signal removing apparatus.

Interference-signal removing apparatuses of embodiments of the present invention will be described below by referring to the accompanying drawings.

In the case of the embodiments, an interference-signal removing apparatus is provided for a receiver for performing radio communication in accordance with, for example, the CDMA mode to remove interference signals from signals (including wide-band desired signals and narrow-band interference signals) received by the receiver.

As an example, when applying an interference-signal removing apparatus of the present invention to the base-station system of a mobile communication system, the base-station system is provided with the interference-signal removing apparatus of the present invention, inputs signals radio-received from a mobile-station system to the interference-signal removing apparatus, and removes interference signals included in the radio-received signals by the interference-signal removing apparatus.

Moreover, as another example, when applying an interference-signal removing apparatus of the present invention to a mobile-station system of a mobile communication system, the mobile-station system is provided with the interference-signal removing apparatus of the present invention, inputs signals radio-received from a base-station system to the interference-signal removing apparatus, and removes interference signals included in the radio-received signals by the interference-signal removing apparatus.

First, an interference-signal removing apparatus of a first embodiment of the present invention will be described below by referring to accompanying drawings.

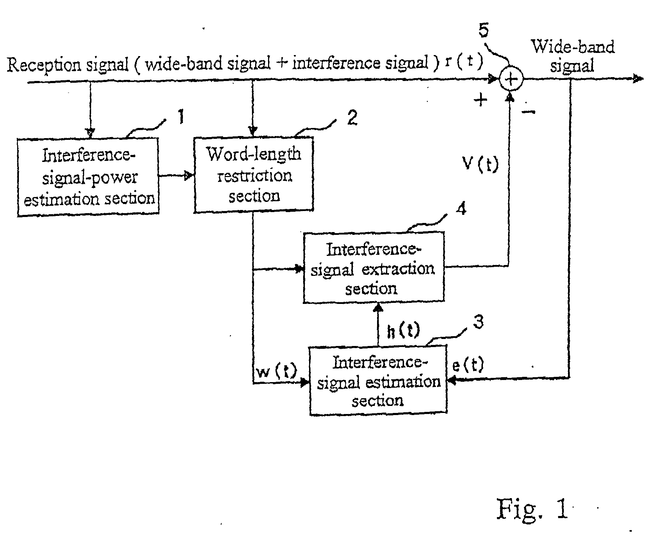

Fig. 1 shows an interference-signal removing apparatus of the present invention, which is provided with an interference-signal-power estimation section 1, a word-length restriction section 2, an interference-signal estimation section 3, an interference-signal extraction section 4, and a synthesizer 5. In the case of this interference-signal removing apparatus, a reception signal r(t) in which a wide-band desired signal is synthesized with a plurality of narrow-band interference signals is input to the interference-signal-power estimation section 1, word-length restriction section 2, and synthesizer 5 as an input signal. Symbol t denotes time.

The interference-signal-power estimation section 1 estimates the power of an input interference signal in accordance with the input reception signal r(t) and communicates the estimation result to the word-length restriction section 2.

In this case, to estimate the power of an interference signal in accordance with the reception signal r(t), it is possible to use a method of spectrum-analyzing and estimating the reception signal r(t). Moreover, in the case of a communication system controlled so that reception power previously becomes constant like CDMA, for example, it is possible to use the power of a reception signal or a power proportional to the reception signal as an interference signal.

The word-length restriction section 2 restricts the effective word length of the input reception signal r(t) in accordance with an estimation result communicated from the interference-signal-power estimation section 1 and outputs the reception signal r(t) after the effective word length is restricted to the interference-signal estimation section 3 and interference-signal extraction section 4.

In this case, the word-length restriction section 2 regards the reception signal r(t) as digital-value data and thereby restricts the effective word length of the digital-value data. Specifically, to restrict the word length of data, when the reception signal r(t) is 16-bit digital-value data and the effective word length of a wide-band signal in the reception signal r(t) is equivalent to 6 bits, word-length restriction is applied to, for example, low-order 7 bits to use high-order 9 bits as a reception signal w(t) after word length restriction. Moreover, as another example, when the reception signal r(t) is 16-bit digital-value data and the effective word length of a wide-band signal in the signal r(t) is equivalent to 4 bits, word-length restriction is applied to low-order 5 bits to use high-order 11 bits as the reception signal w(t) after word length restriction.

Thus, by restricting the effective word length of the reception signal r(t), it is possible to set a wide-band signal and an interference signal having a comparatively low level to the quantization-noise level or lower. Thereby, it is possible to prevent frequency components of an interference signal and a wide-band signal respectively having a low reception level from being estimated by the interference-signal estimation section 3 and moreover, prevent a wide-band signal from being extracted together with an interference signal by the interference-signal extraction section 4.

Moreover, to restrict an effective word length through an operation, it is possible to use a method using a simple configuration of applying the AND (logical product) operation of FFF0 (H: hexadecimal number) or the like to 16-bit data. Specifically, when applying the AND operation of FFF0 to 16-bit data, it is possible to set all low-order 4-bit data values to "0" while leaving values (value "1" or "0") of high-order 12 bits of the 16-bit data values and resultantly, restrict the word length of the data to 12 bits.

The interference-signal estimation section 3 estimates an interference signal in accordance with an input effective-word-length-restricted reception signal w(t) and some signals e(t) of interference-removed reception signals output from the synthesizer 5 and outputs an interference-signal estimation coefficient h(t) that is the above estimation result to the interference-signal extraction section 4.

The interference-signal extraction section 4 extracts an interference signal V(t) from the input reception signal w(t) after effective-word-length restriction in accordance with the interference-signal estimation coefficient h(t) input from the interference-signal estimation section 3 and outputs the extracted interference signal V(t) to the synthesizer 5.

The synthesizer 5 removes the interference signal V(t) from the reception signal r(t) by subtracting the interference signal V(t) input from the interference-signal extraction section 4 from the input reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some of interference-removed reception signals output from the synthesizer 5 are input to the interference-signal estimation section 3 as error signals e(t).

By using the timing having a predetermined time interval as the timing for estimating the power of an interference signal by the interference-signal-power estimation section 1 or the timing for estimating an interference signal by the interference-signal estimation section 3 as a preferable mode, it is possible to easily realize an apparatus and it can be expected that power consumption is reduced. Particularly, when a narrow-band interference signal is not a signal according to the FHSS mode or TDMA mode, that is, the signal is not a signal whose frequency or power does not suddenly change, it is unnecessary to perform interference removal by following the interference signal at a high speed. Therefore, even if a configuration is used in which update or the like of the estimating operation of an interference signal (update of the filter-tap-coefficient series (interference-signal estimation coefficient) h(t)) is performed, for example, every 256 samples instead of performing the update every time, it is possible to completely remove continuous narrow-band interference signals.

In the case of the above configuration using a predetermined time interval, for example, the interference-signal removing capacity may be slightly deteriorated, the deterioration value is approx. 5 dB at most. Therefore, in the case of this configuration, it is possible to greatly reduce the operational throughput for update or the like without deteriorating the interference-signal removing capacity and thereby, obtain a large advantage that the size and power consumption of hardware can be reduced.

Moreover, it is possible to perform adaptive interference removal by decelerating a cycle for update or the like of the estimating operation of an interference signal when a narrow-band interference signal is a continuous signal (signal whose frequency and power slowly change) like a signal according to the FDMA mode, FM mode, or AM mode by accelerating the cycle when a narrow-band signal is a signal whose frequency and power suddenly change like a signal according to the FHSS mode or TDMA mode in accordance with the property of the interference signal, for example.

As described above, in the case of the interference-signal removing apparatus of this embodiment, the interference-signal-power estimation section 1 estimates the power of a narrow-band interference signal included in a wide-band reception signal r(t) in, for example, a reception-system transmission line, the word-length restriction section 2 restricts the effective word length of the reception signal r(t) in accordance with the above estimation result, the interference-signal estimation section 3 estimates an interference signal in accordance with the reception signal w(t) whose effective word length is restricted, the interference-signal extraction section 4 extracts the interference signal V(t) from the reception signal w(t) whose effective word length is restricted, and the synthesizer 5 removes the interference signal V(t) from the reception signal r(t) by the extracted interference signal V(t) and thereby extracts and outputs only wide-band desired signals.

Therefore, the interference-signal removing apparatus of this embodiment removes only interference signals exceeding a specific power from the reception signal r(t), in which interference is not removed from an interference signal showing better characteristic when interference is not removed from the signal. Therefore, it is possible to prevent reception quality from being deteriorated because even a desired signal to be received is conventionally extracted and removed together with an interference signal and thereby, improve the bit error ratio of an interference-removed reception signal.

Specifically, the interference-signal removing apparatus of this embodiment makes it possible to prevent a signal not reaching a specified level from being estimated and extracted by controlling interference removal corresponding to the power of an interference signal, restricting the word length of the reception signal r(t) by the portion for estimation and restriction of the interference signal, and thereby burying the signal not reaching the specified level in quantization noises.

Moreover, the interference-signal removing apparatus of this embodiment makes it possible to properly remove interference signals from wide-band frequency signals even when a plurality of narrow-band interference signals included in wide-band signals are superimposed and received, particularly makes it possible to prevent wide-band signals located at an adjacent channel of the interference signal from being removed.

In the case of the interference-signal removing apparatus of this embodiment, noise components are slightly left after interference is removed. However, as described by referring to Fig. 15, it is possible to completely remove the noise components by the interference-signal suppression effect of CDMA, for example.

Thus, the interference-signal removing apparatus of this embodiment makes it possible to improve the reception characteristic when the power of a narrow-bane interference signal is almost equal to or smaller than that of a wide-band signal compared to a conventional case by controlling the interference-signal removal action and moreover, improve the bit error ratio of an interference-removed reception signal as a whole because the signal component of a wide-band signal is not extracted.

As described above, it is possible to constitute the interference-signal removing apparatus of this embodiment in which the interference-signal-power estimation section 1 performs the operation for estimation of the power of an interference signal at a predetermined time interval as a preferable mode. In this case, it is permitted to use an optional time interval as the predetermined time interval in accordance with the operating state or the like of the apparatus.

Moreover, when reception power is controlled so as to be kept constant like the case of CDMA, it is possible to constitute the interference-signal removing apparatus of this embodiment in which the interference-signal-power estimation section 1 estimates the power of an interference signal by using the power of the reception signal r(t) and thereby, the section 1 can determine whether the interference signal is present by using only the reception power as a preferable mode. Furthermore, it is possible to realize the above estimation of interference-signal power by performing spectrum analysis.

Furthermore, it is possible to constitute the interference-signal removing apparatus of this embodiment in which the interference-signal estimation section 3 performs the operation for estimation of an interference signal at a predetermined time interval as a preferable mode. It is permitted to use an optional time interval as the predetermined time interval in accordance with the operating state or the like of the apparatus.

In the case of this embodiment, the interference-signal-level estimation means of the present invention is constituted of the interference-signal-power estimation section 1, the interference-signal estimation means of the present invention is constituted of the interference-signal estimation section 2, the input-signal control means of the present invention is constituted of word-length restriction section 3, the interference-signal extraction means of the present invention is constituted of the interference-signal extraction section 4, and the interference-signal removal means of the present invention is constituted of the synthesizer 5. Moreover, in the case of this embodiment, the interference-signal extraction means extracts interference signals from input signals whose effective word lengths are restricted.

Then, an interference-signal removing apparatus of a second embodiment of the present invention will be described below by referring to the accompanying drawings.

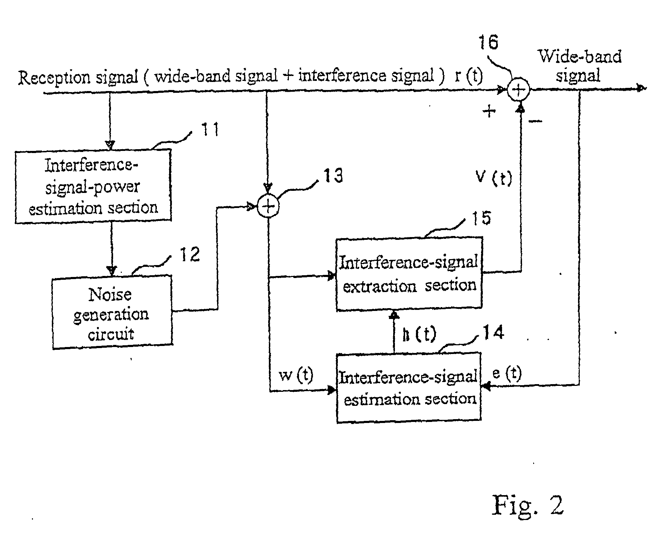

Fig. 2 shows an interference-signal removing apparatus of the present invention that is provided with an interference-signal-power estimation section 11, a nose-generation circuit 12, an addition circuit 13, an interference-signal estimation section 14, an interference-signal extraction section 15, and a synthesizer 16. In the case of this interference-signal removing apparatus, a reception signal r(t) in which a wide-band desired signal is synthesized with a plurality of narrow-band interference signals is input to the interference-signal-power estimation section 11, addition circuit 13, and synthesizer 16 as an input signal. Symbol t denotes time.

In this case, the configuration of the interference-signal removing apparatus of this embodiment is the same as the configuration of the interference-signal removing apparatus of the first embodiment shown in Fig. 1 except that noises are added to the reception signal r(t) instead of restricting the effective word length of the reception signal r(t). In the case of this embodiment, components different from those of the first embodiment will be described below in detail.

The interference-signal-power estimation section 11 estimates the power of an interference signal in accordance with the input reception signal r(t) and communicates the estimation result to the noise generation circuit 12.

The noise generation circuit 12 generates pseudonoises and outputs the generated noises to the addition circuit 13 in accordance with the estimation result communicated form the interference-signal-power estimation section 11.

The addition circuit 13 synthesizes the input reception signal r(t) with noises input from the noise generation circuit 12 and outputs the synthesis result to the interference-signal estimation section 14 and interference-signal extraction section 15 as a noise-added reception signal w(t).

In this case, to add pseudonoises to the reception signal r(t), it is also possible to use a method of using an automatic gain control amplifier (AGC-AMP: AGC-Amplifier), thereby lowering the gain level of the reception signal r(t), and lowering a low-level interference signal included in the reception signal r(t) to a noise level as another example.

It is substantially realized to add noises to the reception signal r(t) also through the above method by lowering the gain level of the reception signal r(t). The present invention also includes a configuration using the above method.

Thus by adding noises to the reception signal r(t), it is possible to lower a wide-band signal and an interference signal having a comparatively low level to a quantization-noise level or lower and thereby, it is possible to prevent frequency components of a low-reception-level interference signal and a wide-band signal respectively having a low reception level from being estimated by the interference-signal estimation section 14. Moreover, it is possible to prevent both an interference signal and a wide-band signal from being extracted by the interference-signal extraction section 15.

The interference-signal estimation section 14 estimates an interference signal in accordance with the input noise-added reception signal w(t) and some signals e(t) of interference-removed reception signals output from the synthesizer 16 and outputs an interference-signal estimation coefficient h(t) which is the above estimation result to the interference-signal extraction section 15.

The interference-signal extraction section 15 extracts an interference signal V(t) from the input noise-added reception signal w(t) in accordance with the interference-signal estimation coefficient h(t) input from the interference-signal estimation section 14 and outputs the extracted interference signal V(t) to the synthesizer 16.

The synthesizer 16 removes the interference signal V(t) from the reception signal r(t) by subtracting the interference signal V(t) input from the interference-signal extraction section 15 from the input reception signal r(t) and outputs the interference-removed reception signal from the interference-signal removing apparatus. In this case, when a proper interference signal V(t) is extracted, most interference-removed reception signals become signals from which only wide-band signals are removed. Moreover, some of interference-removed reception signals output from the synthesizer 16 are input to the interference-signal estimation section 14 as error signals e(t).

As described above, in the case of the interference-signal removing apparatus of this embodiment, the interference-signal-power estimation section 11 estimates the power of a narrow-band interference signal included in a wide-band reception signal r(t) in, for example, a reception-system transmission line, the noise generation section 12 generates optional noises in accordance with the above estimation result, the addition circuit 13 synthesizes the reception signal r(t) with the noises, the interference-signal estimation section 14 estimates an interference signal in accordance with the reception signal w(t) to which the noises are added, the interference-signal extraction section 15 extracts the interference signal V(t) from the reception signal w(t) to which the noises are added in accordance with the above estimation result, and the synthesizer 16 removes the interference signal V(t) from the reception signal r(t) by using the extracted interference signal V(t), and thereby extracts and outputs only wide-band desired signals.

Therefore, the interference-signal removing apparatus of this embodiment makes it possible to obtain the same advantage as the first embodiment by the configuration of adding noises to the reception signal r(t). Specifically, the interference-signal removing apparatus of this embodiment removes interference correspondingly to the power of an interference signal, controls noises added to the reception signal r(t) at portions relating to estimation and extraction of an interference signal, and thereby buries a signal not reaching a specified level in noises. Thus, it is possible to prevent the signal from estimated and extracted as an interference signal.

Because the interference-signal removing apparatus of this embodiment adds noises to the reception signal r(t), it is possible to obtain the same advantage as the first embodiment and moreover, handle the reception signal r(t) as an analog signal by the configuration of adding noises. Therefore, the interference-signal removing apparatus effectively operates when using an analog operation device such as the filter circuit disclosed in the official gazette of Japanese Patent Application Laid-Open No. 6-164320. Moreover, the above document discloses a filter circuit that functions as an FIR-type filter or IIR-type filter.

Moreover, it is also easy to add noises to the reception signal r(t) by a digital circuit. Specifically, it is realized to add noises to the reception signal r(t) by generating noises by, for example, a pseudonoise series, controlling levels of the noises, and then adding the level-controlled noises to the reception signal r(t).

In the case of this embodiment, the interference-signal-level estimation means of the present invention is constituted of the interference-signal-power estimation section 11, the input-signal control means of the present invention is constituted of the noise generation circuit 12 and addition circuit 13, the interference-signal estimation means of the present invention is constituted of the interference-signal estimation section 14, the interference-signal extraction means of the present invention is constituted of the interference-signal extraction section 15, and the interference-signal removal means of the present invention is constituted of the synthesizer 16. Moreover, in the case of this embodiment, the interference-signal extraction means extracts interference signals from noise-added input signals.

Then, an interference-signal removing apparatus of a third embodiment of the present invention will be described below by referring to the accompanying drawings.

Fig. 3 shows an interference-signal removing apparatus of the present invention. The interference-signal removing apparatus is provided with an interference-signal-power estimation section 21, a first multiplier 22, an interference-signal estimation section 23, an interference-signal extraction section 24, a second multiplier 25, and a synthesizer 26. In the case of the interference-signal removing apparatus, a reception signal r(t) in which a wide-band desired signal is synthesized with a plurality of narrow-band interference signals is input to the interference-signal-power estimation section 21, first multiplier 22, and synthesizer 26 as an input signal. Symbol t denotes time.

In this case, the configuration of the interference-signal removing apparatus of this embodiment is the same as the configuration of the interference-signal removing apparatus of the first embodiment except that the reception signal r(t) is multiplied by a control coefficient $\alpha$ of less than 1 instead of controlling the effective word length of the reception signal r(t). Therefore, in the case of this embodiment, components different from those of the first embodiment will be described below in detail.

The interference-signal-power estimation section 21 estimates the power of an interference signal in accordance with the input reception signal r(t), outputs the control coefficient $\alpha$ calculated in accordance with the above estimation result to the first multiplier 22 and also outputs the inverse number $(1/\alpha)$ of the control coefficient $\alpha$ to the second multiplier 25.

The first multiplier 22 throttles the input reception signal r(t) by multiplying the input reception signal r(t) by the control coefficient $\alpha$ input from the interference-signal-power estimation section 21 and outputs the reception signal w(t) multiplied by $\alpha$ obtained as the above multiplication result to the interference-signal estimation section 23 and interference-signal extraction section 24.

Thus, by multiplying a reception signal r(t) by a control coefficient $\alpha$ of less than 1, it is possible to set a wide-band signal and an interference signal having a comparatively low level to the quantization-noise level or lower. Thereby, it is possible to prevent frequency components of an interference signal and a wide-band signal respectively having a low reception level from being estimated by the interference-signal estimation section 23 and a wide-band signal from being extracted by the interference-signal extraction section 24 simultaneously with an interference signal. When multiplying the reception signal r(t) by the control coefficient $\alpha$, digits removed from significant digits of an operation become zero as a result of calculation.

The interference-signal estimation section 23 estimates an interference signal in accordance with the input reception signal w(t) multiplied by $\alpha$ and some signals e(t) of interference-removed reception signals output from the synthesizer 26 and outputs an interference-signal estimation coefficient h(t) which is the above estimation result to the interference-signal extraction section 24.

The interference-signal extraction section 24 extracts the interference signal V(t) from the input reception signal w(t) multiplied by $\alpha$ in accordance with the interference-signal estimation coefficient h(t) input from the interference-signal estimation section 23 and outputs the extracted interference signal V(t) to the second multiplier 25.

The second multiplier 25 corrects an output level by multiplying the interference signal V(t) input from the interference-signal extraction section 24 by the value $(1/\alpha)$ input from the interference-signal-power estimation section 21 and outputs the above multiplication result to the synthesizer 26 and a level-corrected interference signal V'(t).

The synthesizer 26 removes the interference signal V'(t) from the reception signal r(t) by subtracting the level-corrected interference signal V'(t) input from the second multiplier 25 from the input reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some of interference-removed reception signals output from the synthesizer 26 are input to the interference-signal estimation section 23 as error signals e(t).

As described above, in the case of the interference-signal removing apparatus of this embodiment, the interference-signal-power estimation section 21 estimates the power of a narrow-band interference signal included in a wide-band reception signal r(t) in a reception-system transmission line, the first multiplier 22 multiplies the reception signal r(t) by the control coefficient $\alpha$ according to the above estimation result, the interference-signal estimation section 23 estimates an interference signal in accordance with a reception signal w(t) multiplied by the control coefficient $\alpha$, the interference-signal extraction section 24 extracts an interference signal V(t) in accordance with the reception signal w(t) multiplied by the control coefficient $\alpha$ in accordance with the above estimation result, the second multiplier 25 corrects an output level by multiplying the extracted interference signal V(t) by $(1/\alpha)$, and the synthesizer removes the interference signal V'(t) from the reception signal r(t) by using the level-corrected interference signal V'(t) and thereby extracts and outputs only wide-band desired signals.

Therefore, because the interference-signal removing apparatus of this embodiment has the configuration of multiplying a reception signal r(t) by a control coefficient $\alpha$ of less than 1, it is possible to obtain the same advantage as the case of the first embodiment. Specifically, the interference-signal removing apparatus of this embodiment makes it possible to prevent a signal not reaching a specified level from estimated and extracted as an interference signal by performing the interference removal control corresponding to the power of an interference signal, controlling the level of the reception signal r(t) in accordance with the control coefficient $\alpha$ at portions related to estimation and extraction of an interference signal, and thereby burying the signal not reaching the specified level in noises.

By multiplying a reception signal r(t) by a control coefficient $\alpha$ of less than 1 like this embodiment, it is possible to obtain the same advantage as the case of the effective word restriction described for the first embodiment.

For example, when fixing an operational word length to 16 bits, it is possible to obtain an advantage same as the case of applying 3-bit effective-word-length restriction to the reception signal r(t) by using a control coefficient $\alpha$ of

0.125 and obtain an advantage same as the case of applying 1-bit effective-word-length restriction to the reception signal r(t) by using a control coefficient $\alpha$ of 0.5. Moreover, by setting the control coefficient $\alpha$ to a value other than $(1/2^n)$, it is also possible to perform finer control.

Moreover, in the case of the configuration of this embodiment, the interference signal V(t) is extracted from the reception signal w(t) whose level is throttled by the interference-signal extraction section 24. Therefore, the second multiplier 25 performs the operation for returning the throttled level to the original level.

Because it is purposed to set an effective signal to be left after interference is removed to the quantization-noise level or lower similarly to the case of the first embodiment, it is also preferable to perform level correction by setting the second multiplier 25 immediately after the first multiplier 22 in series. In this case, an operation can be performed without wasting the input range of the interference-signal extraction section 24 and the quantization-noise removal effect can be more easily obtained.

In the case of this embodiment, the interference-signal-level estimation means of the present invention is constituted of the interference-signal-power estimation section 21, the input-signal control means of the present invention is constituted of the interference-signal-power estimation section 21 and the first multiplier 22, the interference-signal estimation means of the present invention is constituted of the interference-signal estimation section 23, the interference-signal extraction section of the present invention is constituted of the interference-signal extraction section 24 and the second multiplier 25, and the interference-signal removal means of the present invention is constituted of the synthesizer 26. Moreover, in the case of this embodiment, the interference-signal extraction means extracts interference signals from input signals.

Then, an interference-signal removing apparatus of a fourth embodiment of the present invention is described by referring to the accompanying drawings.

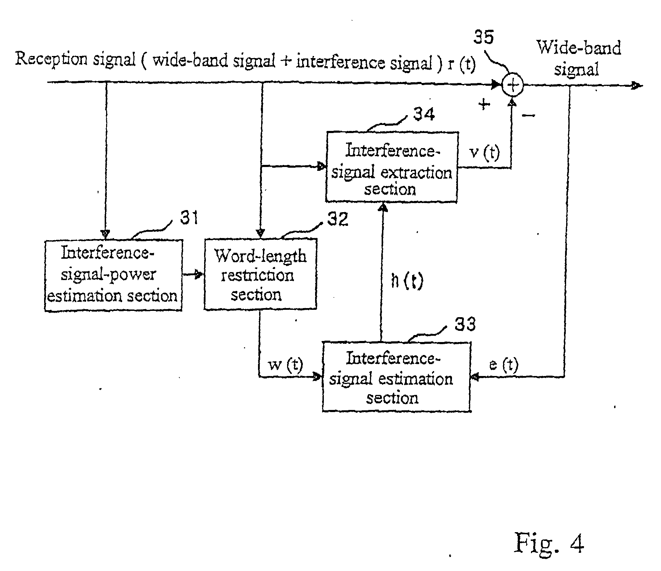

Fig. 4 shows an interference-signal removing apparatus of the present invention. The interference-signal removing apparatus is provided with an interference-signal-power estimation section 31, a word-length restriction section 32, an interference-signal estimation section 33, an interference-signal extraction section 34, and a synthesizer 35. In the case of the interference-signal removing apparatus, a reception signal r(t) in which a wide-band desired signal is synthesized with a plurality of narrow-band interference signals is input to the interference-signal-power estimation section 31, word-length restriction section 32, interference-signal extraction section 34, and synthesizer 235. Symbol t denotes time.

In this case, the configuration of the interference-signal removing apparatus of this embodiment is the same as the configuration of the interference-signal removing apparatus of the first embodiment shown in Fig. 1 except that an interference signal is extracted not from a reception signal w(t) whose effective word length is restricted but directly from the reception signal r(t). In the case of this embodiment, components different from those of the first embodiment will be described below in detail.

The interference-signal-power estimation section 31 estimates the power of an interference signal in accordance with the input reception signal r(t) and communicates the above estimation result to the word-length restriction section 32.

The word-length restriction section 32 restricts the effective word length of the input reception signal r(t) in accordance with an estimation result communicated from the interference-signal-power estimation section 31 and outputs the reception signal w(t) after the effective word length is restricted to the interference-signal estimation section 33.

In this case, the word-length restriction section 32 restricts the effective word length of the reception signal r(t) by assuming the reception signal r(t) as digital-value data. Specifically, to restrict the word length of data, for example, when the reception signal r(t) is 16-bid data and the effective word length of a wide-band signal in the data is equivalent to 6 bits, the section 32 applies word-length restriction to low-order 7 bits of the 16-bit data to use high-order 9 bits of the data as a word-length-restricted reception signal w(t). Moreover, as another example, when the reception signal r(t) is 16-bit data and the effective word length of a wide-band signal in the data is equivalent to 4 bits, the section 32 applies word-length restriction to low-order 5 bits of the 16-bit data to use high-order 11 bits of the data as a word-length-restricted reception signal w(t).

When the effective word length of the reception signal r(t) is restricted as described above, it is possible to set a wide-band signal and an interference signal having a comparatively low level to the quantization-noise level or lower and thereby, it is possible to prevent frequency components of the interference signal and wide-band signal respectively having a comparatively low reception level from being estimated by the interference-signal estimation section 33.

Moreover, to restrict an effective word length through an operation, it is possible to use a simple method of applying AND (logical product) operation of FFF0 (H: hexadecimal number) to, for example, 16-bit data. Specifically, by applying AN operation of FFF0 to 16-bit data, it is possible to set all values of low-order 4 bits to "0" while leaving values ("1" or "0") of high-order 12 bits of the data and resultantly restrict the word length of the data to 12 bits.

The interference-signal estimation section 33 estimates an interference signal in accordance with the input effective-word-length-restricted reception signal w(t) and some signals e(t) of interference-removed reception signals output from the synthesizer 35 by using a general adaptive algorithm such as LMS and outputs the interference-signal estimation coefficient h(t) which is the above estimation result to the interference-signal extraction section 34.

The interference-signal extraction section 34 extracts an interference signal V(t) from the input reception signal r(t) in accordance with the interference-signal estimation coefficient h(t) input from the interference-signal estimation section 33 and outputs the extracted interference signal V(t) to the synthesizer 35.

The synthesizer 35 removes the interference signal V(t) from the reception signal r(t) by subtracting the interference signal V(t) input from the interference-signal extraction section 34 from the input reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some of the interference-removed reception signals output from the synthesizer 35 are input to the interference-signal estimation section 33 as error signals e(t).

As described above, in the case of the interference-signal removing apparatus of this embodiment, the interference-signal-power estimation section 31 estimates the power of a narrow-band interference signal included in a wide-band reception signal r(t) in a reception-system transmission line, the word-length restriction section 32 restricts the effective word length of the reception signal r(t) in accordance with the above estimation result, the interference-signal estimation section 33 estimates an interference signal in accordance with the effective-word-length-restricted reception signal w(t), the interference-signal extraction section 34 extracts an interference signal V(t) from the reception signal r(t) in accordance with the above estimation result, and the synthesizer 35 removes the interference signal V(t) from the reception signal r(t) by using the extracted interference signal V(t) and thereby extracts and outputs only wide-band desired signals.

Therefore, in the case of the interference-signal removing apparatus of this embodiment, it is possible to remove interference from only interference signals exceeding a specified power level and control an interference signal whose characteristic is improved by removing no interference so that interference is not removed by changing the interference-signal removal in accordance with each interference signal. Therefore, it is possible to prevent the reception quality from being deteriorated because even an desired signal to be received is conventionally extracted and removed together with an interference signal and thereby, improve the bit error ratio of an interference-removed reception signal.

Specifically, the interference-signal removing apparatus of this embodiment makes it possible to prevent a signal not reaching a specified level from being estimated as an interference signal by removing interference correspondingly to the power of the interference signal, restricting the word length of a reception signal r(t) at a portion related to estimation of the interference signal, and thereby burying the signal not reaching the specified level in quantization noises.

Moreover, the interference-signal removing apparatus of this embodiment makes it possible to properly remove interference signals from wide-band-frequency signals even when a plurality of narrow-band interference signals included in wide-band signals are superimposed and received.

As described by referring to Fig. 16, in the case of the interference-signal removing apparatus of this embodiment, wide-band signal components are slightly extracted and removed by removing interference and it is estimated that characteristics are deteriorated compared to the case of the first embodiment. However, the interference-signal removing apparatus effectively operates when characteristic deterioration due to noise components remaining for interference-signal extraction is increased by setting a noise level to a high value as shown in Fig. 16b and extracting an interference signal from an effective-word-length-restricted reception signal w(t).

Particularly, the above interference-signal removing apparatus is effective when it is assumed that a reception input level is greatly different from a level for restricting a word length by using the interference-signal removing apparatus in order to prevent output signals from being excessively supplied to an analog reception input section from the interference-signal removing apparatus, using the interference-signal removing apparatus because the dynamic range of an analog/digital converter (ADC) to which signals may be excessively input compared to the case of an actual signal level, or connecting the interference-signal removing apparatus at multiple stage.

Thus, in the case of the interference-signal removing apparatus of this embodiment, it is possible to improve the reception characteristic when the power of a narrow-band interference signal is almost equal to or smaller than that of a wide-band signal compared to a conventional case.

In the case of this embodiment, the interference-signal-level estimation means of the present invention is constituted of the interference-signal-power estimation section 31, the input-signal control means of the present invention is constituted of the word-length restriction section 32, the interference-signal estimation means of the present invention is constituted of the interference-signal estimation section 33, the interference-signal extraction means of the present invention is constituted of the interference-signal extraction section 34, and the interference-signal removal means of the present invention is constituted of the synthesizer 35. Moreover, the interference-signal extraction means directly extracts interference signals from input signals.

Then, an interference-signal removing apparatus of a fifth embodiment of the present invention will be described below by referring to the accompanying drawings.

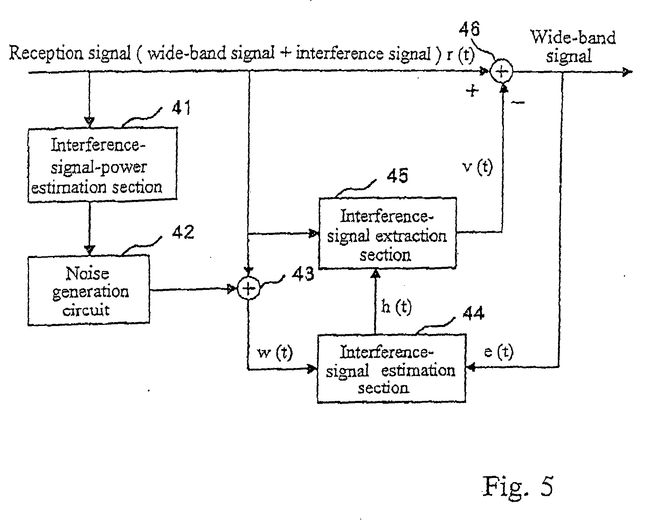

Fig. 5 shows an interference-signal removing apparatus of the present invention. The interference-signal removing apparatus is provided with an interference-signal-power estimation section 41, a noise generation circuit 42, an addition circuit 43, an interference-signal estimation section 44, an interference-signal extraction section 45, and a synthesizer 46. In the case of this interference-signal removing apparatus, a reception signal r(t) in which a wide-band desired signal is synthesized with a plurality of narrow-band interference signals is input to the interference-signal-power estimation section 41, addition circuit 43, interference-signal extraction section 45, and synthesizer 46 as an input signal. Symbol t denotes time.

In this case, the configuration of the interference-signal removing apparatus of this embodiment is the same as that of the interference-signal removing apparatus of the second embodiment shown in Fig. 2 except that an interference signal is extracted not from a noise-added reception signal w(t) but directly from a reception signal r(t) by the interference-signal extraction section 45. In the case of this embodiment, components different from those of the second embodiment will be described below in detail.

The interference-signal-power estimation section 41 estimates the power of an interference in accordance with an input reception signal r(t) and communicates the above estimation result to the noise generation circuit 42.

The noise generation circuit 42 generates pseudonoises in accordance with the estimation result communicated from the interference-signal-power estimation section 41 and outputs the generated noises to the addition circuit 43.

The addition circuit 43 synthesizes an input reception signal r(t) with noises input from the noise generation circuit 42 and outputs the above synthesis result to the interference-signal estimation section 44 as an noise-added reception signal w(t).

Thus, by adding the reception signal r(t) to noises, it is possible to set a wide-band signal and an interference signal having a comparatively low level to the quantization-noise level or lower and thereby, prevent frequency components of an interference signal and a wide-band signal respectively having a low reception level from being estimated by the interference-signal estimation section 44.

The interference-signal estimation section 44 estimates an interference signal in accordance with an input noise-added reception signal w(t) and some signals e(t) of interference-removed reception signals output from the synthesizer 46 by using a general adaptive algorithm such as LMS and outputs an interference-signal estimation coefficient h(t) which is the above estimation result to the interference-signal extraction section 45.

The interference-signal extraction section 45 extracts an interference signal V(t) from an input reception signal r(t) in accordance with the interference-signal estimation coefficient h(t) input from the interference-signal estimation section 45 and outputs the extracted interference signal V(t) to the synthesizer 46.

The synthesizer 46 removes the interference signal V(t) from the reception signal r(t) by subtracting the interference signal V(t) input from the interference-signal extraction section 45 from the input reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some of interference-removed reception signals output from the synthesizer 46 are input to the interference-signal estimation section 44 as error signals e(t).

As described above, in the case of the interference-signal removing apparatus of this embodiment, the interference-signal-power estimation section 41 estimates the power of an interference signal included in a wide-band reception signal r(t) including a plurality of narrow-band interference signals in, for example, the transmission line of a reception system, the noise generation section 42 generates optional noises in accordance with the above estimation result, the addition circuit 43 synthesizes the reception signal r(t) with the noises, the interference-signal extraction section 44 extracts an interference signal V(t) from a reception signal r(t) in accordance with the above estimation result, and the synthesizer 45 removes the extracted interference signal V(t) from a reception signal r(t) by using the interference signal V(t) and thereby extracts and outputs only wide-band desired signals.

Therefore, in the case of the interference-signal removing apparatus of this embodiment, it is possible to obtain the same advantage as the case of the above fourth embodiment by the configuration of adding noises to a reception signal r(t). Specifically, the interference-signal removing apparatus makes it possible to prevent a signal not reaching a specified level from being estimated as an interference signal by performing interference removal control corresponding to the power of the interference signal, controlling noises added to the reception signal r(t) at a portion related to estimation of an interference signal, and burying the signal not reaching the specified level in noises.

Moreover, because the interference-signal removing apparatus of this embodiment makes it possible to analogously add noises to a reception signal r(t), it is possible to use an analog operation device.

In the case of this embodiment, the interference-signal-level estimation means of the present invention is constituted of the interference-signal-power estimation section 41, the input-signal control means of the present invention is constituted of the noise generation circuit 42 and addition circuit 43, the interference-signal estimation means of the present invention is constituted of the interference-signal estimation section 44, the interference-signal extraction means of the present invention is constituted of the interference-signal extraction section 45, and the interference-signal removal means of the present invention is constituted of the synthesizer 46. Moreover, in the case of this embodiment, the interference-signal extraction means directly extracts interference signals from input signals.

Then, an interference-signal removing apparatus of a sixth embodiment of the present invention will be described below by referring to the accompanying drawings.

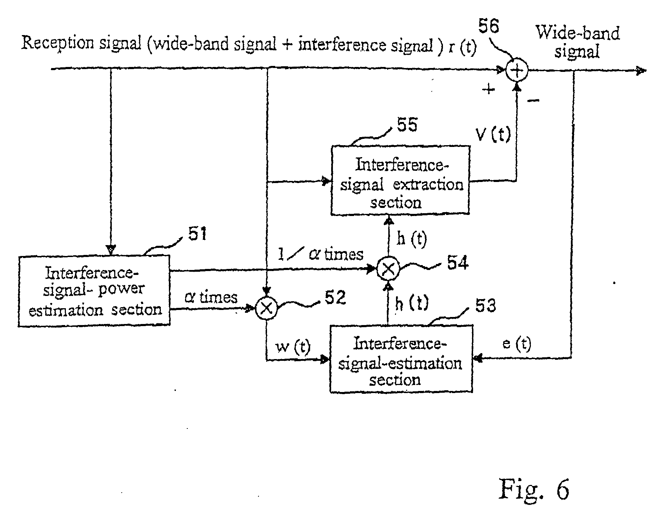

Fig. 6 shows an interference-signal removing apparatus of the present invention. The interference-signal removing apparatus is provided with an interference-signal-power estimation section 51, a first multiplier 52, an interference-signal estimation section 53, a second multiplier 54, an interference-signal extraction section 55, and a synthesizer 56. In the case of the interference-signal removing apparatus, a reception signal r(t) in which a wide-band desired signal is synthesized with a plurality of narrow-band interference signals is input to the interference-signal-power estimation section 51, first multiplier 52, interference-signal extraction section 55, and synthesizer 56 as an input signal. Symbol t denotes time.

The configuration of the interference-signal removing apparatus of this embodiment is the same as the configuration of the interference-signal removing apparatus of the third embodiment shown in Fig. 3 except that an interference signal is extracted not from a reception signal w(t) multiplied by a control coefficient $\alpha$ but directly from a reception signal r(t) by the interference-signal extraction section 55. In the case of this embodiment, components different from those of the third embodiment will be described below in detail.

The interference-signal-power estimation section 51 estimates the power of an interference signal in accordance with an input reception signal r(t) and outputs a control coefficient $\alpha$ according to the above estimation result to the multiplier 52 and the inverse number of the control coefficient $\alpha$ to the second multiplier 54.

The first multiplier 52 throttles the reception signal r(t) by multiplying the input reception signal r(t) by the control coefficient $\alpha$ input from the interference-signal-power estimation section 51 and outputs a reception signal w(t) multiplied by $\alpha$ obtained as the above multiplication result to the interference-signal estimation section 53.

Thus, by multiplying a reception signal r(t) by a control coefficient $\alpha$ of less than 1, it is possible to set a wide band signal and an interference signal having a comparatively low level to the quantization-noise level or lower and thereby, prevent frequency components of an interference signal and a wide-band signal respectively having a low reception level from being estimated by the interference-signal estimation section 53. When multiplying a reception signal r(t) by a control coefficient $\alpha$, digits removed from significant digits of an operation become zero, for example, as a result of calculation.

The interference-signal estimation section 53 estimates an interference signal in accordance with an input reception signal w(t) multiplied by $\alpha$ and some signals e(t) of interference-removed reception signals output from the synthesizer 56 and outputs an interference-signal estimation coefficient h(t) which is the above estimation result to the second multiplier 54.

The second multiplier 54 corrects an output level by multiplying the interference-signal estimation coefficient h(t) input from the interference-signal estimation section 53 by a value $(1/\alpha)$ input from the interference-signal-power estimation section 51 and outputs the above multiplication result to the interference-signal estimation section 55 as a level-corrected interference-signal estimation coefficient h'(t).

The interference-signal extraction section 55 extracts an interference signal V(t) from an input reception signal r(t) in accordance with the level-corrected interference-signal estimation coefficient h'(t) input from the second multiplier 54 and outputs the extracted interference signal V(t) to the synthesizer 56.

The synthesizer 56 removes an interference signal V(t) input from the interference-signal extraction section 56 from an input reception signal r(t) by subtracting the interference signal V(t) from the reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some of interference-removed reception signals output from the synthesizer 56 are input to the interference-signal estimation section 53 as error signals e(t).

As described above, in the case of the interference-signal removing apparatus of this embodiment, the interference-signal-power estimation section 51 estimates the power of an interference signal included in a wide-band reception signal r(t) including a plurality of narrow-band interference signals in, for example, the transmission line of a reception system, the first multiplier 52 multiplies the reception signal r(t) by a control coefficient $\alpha$ according to the above estimation result, the interference-signal estimation section 53 estimates an interference signal in accordance with a reception signal w(t) multiplied by the control coefficient $\alpha$, the second multiplier 54 corrects an output level by multiplying the above estimation result by $(1/\alpha)$, the interference-signal extraction section 55 extracts an interference signal V(t) from the reception signal r(t) in accordance with the above level-corrected estimation result, and the synthesizer 56 removes the interference signal V(t) from the reception signal r(t) by using the interference signal V(t) and thereby extracts and outputs only wide-band desired signals.

Therefore, the interference-signal removing apparatus of this embodiment makes it possible to obtain the same advantage as the case of the fourth embodiment by using a configuration of multiplying a reception signal r(t) by a control coefficient $\alpha$ of less than 1. Specifically, the interference-signal removing apparatus of this embodiment makes it possible to prevent a signal not reaching a specified level from being estimated as an interference signal by performing interference-removal control corresponding to the power of an interference signal, controlling the level of the reception signal r(t) in accordance with the control coefficient $\alpha$ at a portion related to estimation of the interference signal, and burying a signal not reaching a specified level in noises.

By multiplying a reception signal r(t) by a control coefficient $\alpha$ of less than 1 like the case of this embodiment, it is possible to obtain the same advantage as the effective word length restriction shown for the above fourth embodiment, for example.

For example, when fixing an operational word length to 16 bits, it is possible to obtain the same advantage as the case of applying restriction of three-bit effective word length to the reception signal r(t) by using a control coefficient $\alpha$ of 0.125 and the same advantage as the case of applying restriction of one-bit effective word length to the reception signal r(t) by using a control coefficient $\alpha$ of 0.5. Moreover, by setting a control coefficient $\alpha$ to a value other than $(1/2^n)$, it is possible to perform a finer control.

Moreover, in the case of the configuration of this embodiment, an interference signal is estimated by the interference-signal extraction section 53 in accordance with a reception signal w(t) whose level is throttled. Therefore, the operation for returning the above level to the original level is performed by the second multiplier 54.

Because it is an object to set an effective signal to be left after interference is removed to the quantization-noise level or lower similarly to the case of the fourth embodiment, it is preferable to set the second multiplier 54 immediately after the first multiplier 52 in series to perform level correction. In this case, an operation can be performed without wasting the input range of the interference-signal extraction section 55 and the quantization-noise removal effect can be easily obtained.

In the case of this embodiment, the interference-signal-level estimation means of the present invention is constituted of the interference-signal-power estimation section 51, the input-signal control means of the present invention is constituted of the interference-signal-power estimation section 51 and the first multiplier 52, the interference-signal estimation means of the present invention is constituted of the interference-signal estimation section 53 and the second multiplier 54, the interference-signal extraction means of the present invention is constituted of the interference-signal extraction section 55, and the interference-signal removal means of the present invention is constituted of the synthesizer 56. Moreover, this embodiment extracts interference signals directly from input signals.

In the case of the first to sixth embodiments, configurations of controlling effective-word-length restriction to be applied to a reception signal r(t) in accordance with a result of estimating the power of an interference included in the reception signal r(t), a level of noises to be added to the reception signal r(t), and a control coefficient $\alpha$ by which the reception signal r(t) is multiplied are described. For example, however, it is also possible to use a configuration in which the number of bits for effective-word-length restriction to be applied to a reception signal r(t) is set to a fixed value, a configuration in which the level of noises to be added to the reception signal r(t) is set to a fixed value, and a configuration in which a control coefficient $\alpha$ by which the reception signal r(t) is multiplied is set to a fixed value. These configurations respectively make it possible to remove an interference signal exceeding a specified power level in order to prevent excessive inputs of a reception input section and particularly, they are effective when an interference-signal removing apparatus is only used to prevent excessive inputs of the reception input section.

Then, an interference-signal removing apparatus of a seventh embodiment of the present invention will be described below by referring to the accompanying drawings.

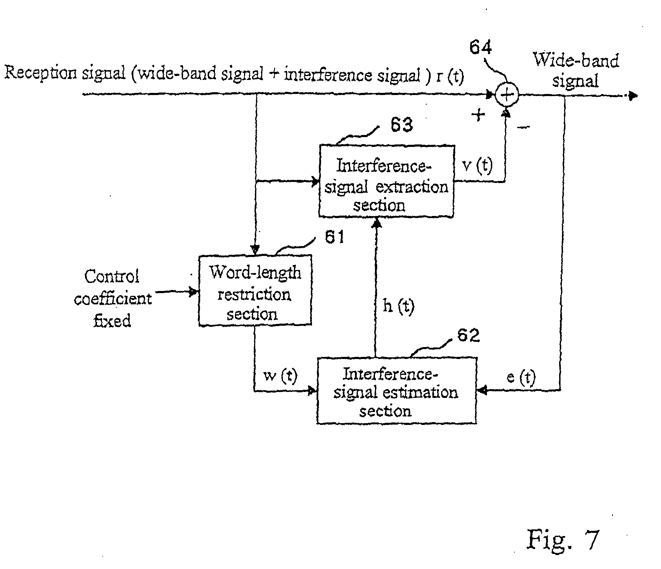

Fig. 7 shows an interference-signal removing apparatus of the present invention. The interference-signal removing apparatus is provided with a word-length restriction section 61, an interference-signal estimation section 62, an interference-signal extraction section 63, and a synthesizer 64. In the case of the interference-signal removing apparatus, a reception signal r(t) in which a wide-band signal is synthesized with a plurality of narrow-band interference signals is input to the word-length restriction section 61, interference-signal extraction section 63, and synthesizer 64 as an input signal. Symbol t denotes time.

In this case, the configuration of the interference-signal removing apparatus of this embodiment is the same as the configuration of the interference-signal removing apparatus of the fourth embodiment shown in Fig. 4 except that effective-word-length restriction controlled in accordance with a control coefficient previously set as a fixed value is applied to a reception signal r(t). Therefore, components different from those of the fourth embodiment will be described below in detail.

The word-length restriction section 61 restricts the effective word length of a reception signal r(t) which is controlled by a control coefficient previously set to a fixed value and input by the fixedly-set number of bits and outputs an effective-word-length-restricted reception signal w(t) to the interference-signal estimation section 62.

By restricting the effective word length of the reception signal r(t) as described above, it is possible to set a wide-band signal and an interference signal having a comparatively low level to the fixedly-set quantization-noise level or lower and thereby, prevent frequency components of an interference signal and a wide-band signal respectively having a low reception level from being estimated by the interference-signal estimation section 62.

The interference-signal estimation section 62 estimates an interference signal in accordance with an input effective-word-length-restricted reception signal w(t) and some signals e(t) of interference-removed reception signals output from the synthesizer 64 by using a general adaptive algorithm such as LMS and outputs an interference-signal estimation coefficient h(t) which is the above estimation result to the interference-signal extraction section 63.

The interference-signal extraction section 63 extracts an interference signal V(t) from an input reception signal r(t) in accordance with the interference-signal estimation coefficient h(t) input from the interference-signal estimation section 62 and outputs the extracted interference signal V(t) to the synthesizer 64.

The synthesizer 64 removes the input interference signal V(t) from the input reception signal r(t) by subtracting the interference signal V(t) input from the interference-signal extraction section 63 form the reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some signals of the interference-removed reception signals output from the synthesizer 64 are input to the interference-signal estimation section 62 as error signals e(t).

As described above, the interference-signal removing apparatus of this embodiment makes it possible to prevent the reception quality from being deteriorated because of conventionally extracting and removing even a desired signal to be received together with an interference signal by applying interference-removal control only to an interference signal exceeding a specified power level previously fixedly set when removing an interference signal included in a reception signal r(t) and thereby, improve the bit error ratio of interference-removed reception signals.

In the case of this embodiment, the input-signal control means of the present invention is constituted of the word-length restriction section 61, the interference-signal estimation means of the present invention is constituted of the interference-signal estimation section 62, the interference-signal extraction means of the present invention is constituted of the interference-signal extraction section 63, and the interference-signal removal means of the present invention is constituted of the synthesizer 64. Moreover, in the case of this embodiment, the interference-signal extraction means extracts interference signals directly from input signals.

As another example, an interference-signal removing apparatus of an eighth embodiment of the present invention will be described below by referring to the accompanying drawings.

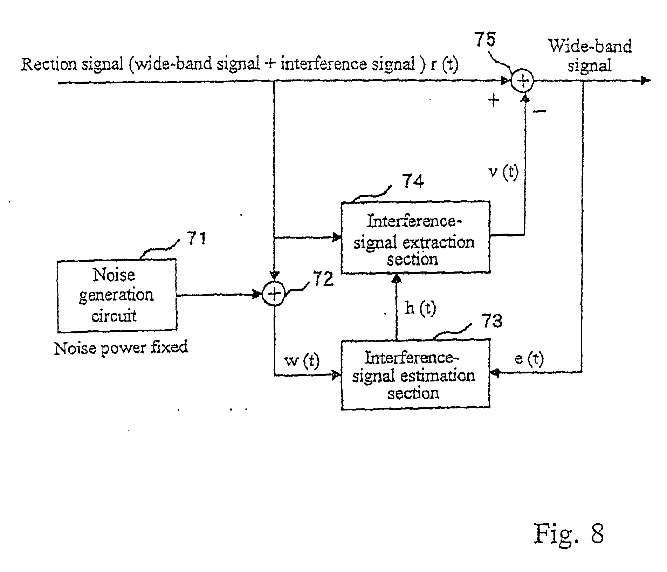

Fig. 8 shows an interference-signal removing apparatus of the present invention. The interference-signal removing apparatus is provided with a noise generation circuit 71, an addition circuit 72, an interference-signal estimation section 73, an interference-signal extraction section 74, and a synthesizer 75. In the case of the interference-signal removing apparatus, a reception signal r(t) in which a wide-band desired signal is synthesized with a plurality of narrow-band interference signals is input to the addition circuit 72, interference-signal extraction section 74, and synthesizer 75 as an input signal. Symbol t denotes time.

In this case, the configuration of the interference-signal removing apparatus of this embodiment is the same as the configuration of the interference-signal removing apparatus of the fifth embodiment shown in Fig. 5 except that noise having a power level previously set as a fixed value is added to the reception signal r(t). Therefore, in the case of this embodiment, components different from those of the fifth embodiment will be described below in detail.

The noise generation circuit 71 generates pseudonoises having a power level previously fixedly set and outputs the generated noises to the addition circuit 72.

The addition circuit 72 synthesizes an input reception signal r(t) with noises input from the noise generation circuit 71 and outputs the above synthesis result to the interference-signal estimation section 73 as a noise-added reception signal w(t).

By adding noise to the reception signal r(t) as described above, it is possible to set a wide-band signal and an interference signal having a comparatively low level to the fixed-set quantization-noise level or lower and thereby, prevent frequency components of an interference signal and a wide-band signal respectively having a low reception level from being estimated by the interference-signal estimation section 73.

The interference-signal estimation section 73 estimates an interference signal in accordance with an input noise-added reception signal w(t) by using a general adaptive algorithm such as LMS and some signals e(t) of interference-removed reception signals output from the synthesizer 75 and outputs an interference-signal estimation coefficient h(t) which is the above estimation result to the interference-signal extraction section 74.

The interference-signal extraction section 74 extracts an interference signal V(t) from an input reception signal r(t) in accordance with an interference-signal estimation coefficient h(t) input from the interference-signal estimation section 73 and outputs the extracted interference signal V(t) to the synthesizer 75.

The synthesizer 75 removes the interference signal V(t) from the input reception signal r(t) by subtracting the interference signal V(t) input from the interference-signal extraction section 74 from the input reception signal r(t) and outputs the interference-removed reception signal from the interference-signal removing apparatus. In this case, when a proper interference signal V(t) is extracted, most interference-removed reception signals become signals from which only wide-band signals are extracted. Moreover, some of interference-removed reception signals output from the synthesizer 75 are input to the interference-signal estimation section 73 as error signals e(t).

As described above, the interference-signal removing apparatus of this embodiment makes it possible to obtain the same advantage as the case of the seventh embodiment by using a configuration of adding noises having a previously-fixedly-set level to a reception signal t(t).

Moreover, as described for the above second embodiment, because the interference-signal removing apparatus of this embodiment cam analogously add noises to a reception signal r(t), it is also possible to use an analog operation device.

In the case of this embodiment, the input-signal control means of the present invention is constituted of the noise generation circuit 71 and addition circuit 72, the interference-signal estimation means of the present invention is constituted of the interference-signal estimation section 73, the interference-signal extraction means of the present invention is constituted of the interference-signal extraction section 74, and the interference-signal removal means of the present invention is constituted of the synthesizer 75. Moreover, this embodiment extracts interference signals directly from input signals.

Then, a diversity reception system of an embodiment of the present invention will be described below by referring to the accompanying drawings.

In the case of this embodiment, a diversity reception system is provided for a receiver for performing radio communication in accordance with, for example, the CDMA mode and has two branches. Moreover, an interference-signal removing apparatus provided for the diversity reception system of this embodiment uses one of the interference-signal removing apparatuses of the present invention described for the first to eighth embodiments, which removes interference signals from signals (signals including wide-band desired signals and narrow-band interference signals) received by the above receiver.

The diversity reception system of this embodiment described below has the above interference-signal removing apparatus on at least one branch to make it possible to input the signal of the at least one branch to the interference-signal removing apparatus and remove interference signals from the above signal by the interference-signal removing apparatus.

In case the diversity reception system has the above interference-signal removing apparatus on plural branches, for example, each branch has the interference-signal removing apparatus.

Specifically, an interference-signal removing apparatus is provided for at least one of a plurality of branches of a diversity receiver. Moreover, it is controlled to turn on/off the interference-signal removing apparatus according to necessity. The interference-signal removing apparatus can be turned on/off so that interference is not removed when there is no interference signal or there is only an interference signal at a low level is present in accordance with a result of detecting the power of the interference signal. Thereby, it is possible to prevent a disadvantage that characteristics are rather deteriorated by removing interference when there is no interference signal or there is only an interference signal at a low level.

First, a diversity reception system of a ninth embodiment of the present invention will be described below by referring to the accompanying drawings.

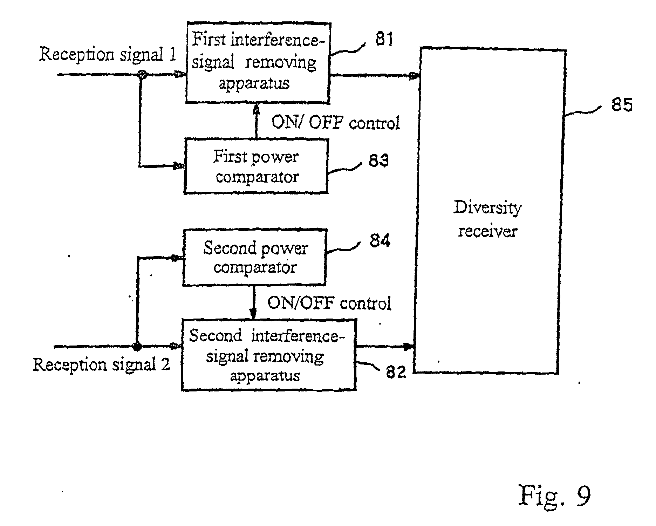

Fig. 9 shows a diversity reception system of the present invention. The diversity reception system is provided with a first interference-signal removing apparatus 81, a second interference-signal removing apparatus 82, a first power comparator 83, a second power comparator 84, and a diversity receiver 85.

In the case of the diversity reception system of this embodiment, a signal (reception signal 1) received through a first antenna corresponding to a first branch of the diversity receiver 85 is input to the first interference-signal removing apparatus 81 and first power comparator 83 and a signal (reception signal 2) received through a second antenna corresponding to a second branch of the diversity reception receiver 85 is input to the second interference-signal removing apparatus 82 and second power comparator 84.

When the first interference-signal removing apparatus 81 is turned on by the first power comparator 83, it removes interference from the input reception signal 1 and outputs the interference-removed reception signal 1 to the diversity receiver 85. When the apparatus 81 is turned on, it directly outputs the reception signal 1 to the diversity receiver 85.

The first power comparator 83 compares the power of the input reception signal 1 with a predetermined threshold. When the power of the reception signal 1 exceeds the threshold, the comparator 83 turns on the first interference-signal removing apparatus 81 to remove interference from the reception signal 1. However, when the power of the reception signal 1 is equal to or less than the threshold (when the power of the signal 1 does not exceed the threshold), the comparator 83 turns off the first interference-signal removing apparatus 81 to directly output the reception signal 1.

Similarly, when the second interference-signal removing apparatus 82 is turned on by the second power comparator 84, it removes interference from the input reception signal 2 and outputs the interference-removed reception signal 2 to the diversity receiver 85. When the apparatus 82 is turned on, it directly outputs the input reception signal 2 to the diversity receiver 85.

Moreover, the second power comparator 84 compares the power of the input reception signal 2 with a predetermined threshold. When the power of the reception signal 2 exceeds the threshold, the comparator 84 turns on the second interference-signal removing apparatus 82 to remove interference from the reception signal 2. However, when the power of the reception signal 2 is equal to or less than the threshold (when the power does not exceed the threshold), the comparator 84 turns off the second interference-signal removing apparatus 82 and directly outputs the reception signal 2.

The diversity receiver 85 performs diversity reception in accordance with the reception signal input from the first interference-signal removing apparatus 81 and the reception signal 2 input from the second interference-signal removing apparatus 82. Specifically, the receiver 85 selects and receives a higher-level reception signal out of the reception signals 1 and 2 or synthesizes the reception signals 1 and 2 at a proper ratio and receives this synthesis result.

As described above, the diversity reception system of this embodiment includes the first interference-signal removing apparatus 81 and the second interference-signal removing apparatus 82 for removing interference signals from reception signals including a wide-band signal and a plurality of interference signals whose bands are narrower than that of the wide-band signal in two input sections of the diversity receiver 85 so that the first and second interference-signal removing apparatuses 81 and 82 can be independently turned on/off by the first and second power comparators 83 and 84 in order to remove interference. Thereby, it is possible to control the on/off operation for each of the reception signals 1 and 2 obtained through diversity reception.

Moreover, the diversity reception system of this embodiment turns on/off the interference-signal removing apparatuses 81 and 82 in accordance with a result of comparing the reception signals 1 and 2 input to the interference-signal removing apparatuses 81 and 82 with a predetermined threshold. Specifically, when the power of the reception signal 1 or 2 exceeds the threshold, the diversity reception system operates the interference-signal removing apparatus 81 or 82 corresponding to the reception signal 1 or 2 to remove interference. It is permitted to use an optional value as the threshold. Moreover, though this embodiment turns on/off the interference-signal removing apparatuses 81 and 82 in accordance with power levels of the reception signals 1 and 2, it is also permitted to use other level such as the level of amplitude as a signal level.

Therefore, the diversity reception system of this embodiment can further improve characteristics by independently turning on/off the interference-signal removing apparatuses 81 and 82 every reception input of each branch even under a condition in which characteristics are rather improved by not removing interference when the power of a wide-band desired signal is equal to or larger than that of a narrow-band interference signal, for example, as shown by the characteristic examples in Fig. 29. Thereby, also when the power of a narrow-band interference signal is equal to or smaller than that of a wide-band signal, it is possible to realize interference removal for minimizing deterioration of communication quality. Particularly, it is effective to apply the above configuration to diversity reception like the case of this embodiment. Thus, it is possible to further improve characteristics than ever by effectively using an interference-signal removing apparatus for the diversity reception system of this embodiment.

Moreover, when the input level of a receiver is controlled so as to be constant like the case of a CDMA system, for example, the fact that the power of a reception signal exceeds a specified level indicates that an interference signal is included in the reception signal. Therefore, it is possible to properly turn on/off the interference-signal removing apparatuses 81 and 82 by using fixed value as the threshold of the power of a reception signal and thereby comparing power levels.

Furthermore, it is possible to use a configuration in which the first power comparator 83 and second power comparator 84 are replaced with spectrum analyzers. In the case of this configuration, it is possible to independently turn on/off the interference-signal removing apparatuses 81 and 82 by performing spectrum analysis of the reception signal 1 input to the first interference-signal removing apparatus 81 by a first spectrum analyzer and when the power difference between a desired signal and an interference signal exceeds a predetermined threshold as a result of the spectrum analysis, operating the first interference-signal removing apparatus 81 to remove interference, performing spectrum analysis of the reception signal 2 input to the second interference-signal removing apparatus 82 by a second spectrum analyzer and when the power difference between a desired signal and an interference signal exceeds a predetermined threshold as a result of the spectrum analysis, operating the second interference-signal removing apparatus 82 to remove interference.

Furthermore, though an interference-signal removing apparatus using an adaptive control mode does not start interference-signal removal immediately after starting the interference removing operation because learning is necessary, it is possible to prevent interference-signal removal from being immediately started by performing the following operations as a preferable mode. That is, by making the threshold of the first power comparator 83 different from that of the second power comparator 84 and providing a difference of, for example, 10 dB between thresholds of branches, it is possible to avoid the interference-signal removing apparatuses 81 and 82 from being simultaneously turned off even under a boundary condition in which levels of interference signals are fluctuated due to fading and thereby, the interference-signal removing apparatuses 81 and 82 are frequently turned on/off. Thereby, it is possible to perform more-stable interference removal. Moreover, the above configuration makes it possible to reduce the power consumption for turning on/off the interference-signal removing apparatuses 81 and 82. Thus, it is also effective to use a configuration of setting operational conditions for turning on/off interference-signal removing apparatuses so as to be different from each other every branch of a diversity receiver.

Then, a diversity reception system of a tenth embodiment of the present invention will be described below by referring to the accompanying drawings.

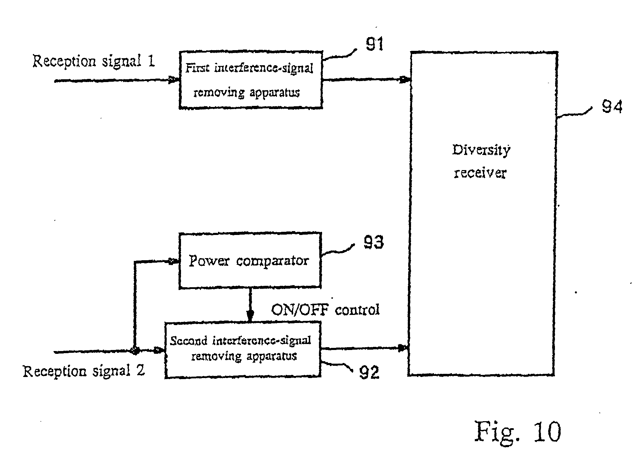

Fig. 10 shows a diversity reception system of the present invention. The diversity reception system is provided with a first interference-signal removing apparatus 91, a second interference-signal removing apparatus 92, a power comparator 93, and a diversity receiver 94.

In the case of the diversity reception system of this embodiment, a signal (reception signal 1) received through a first antenna corresponding to a first branch of the diversity receiver 94 is input to the first interference-signal removing apparatus 91 and a signal (reception signal 2) received through a second antenna corresponding to a second branch of the diversity receiver 94 is input to the second interference-signal removing apparatus 92 and power comparator 93.

The configuration of the diversity reception system of this embodiment is the same as that of the diversity reception system of the ninth embodiment shown in Fig. 9 except that the interference-signal removing apparatus 91 always operates while the interference-signal removing apparatus 92 is turned on/off. In the case of this embodiment, configurations different from those of the ninth embodiment will be described below in detail.

The first interference-signal removing apparatus 91 always operates to remove interference from the input reception signal 1 and outputs the interference-removed reception signal 1 to the diversity receiver 94.

When the second interference-signal removing apparatus 92 is turned on by the power comparator 93, it removes interference from the input reception signal 2 and outputs the interference-removed reception signal 2 to the diversity receiver 94. Moreover, when the second interference-signal removing apparatus 92 is turned off, it directly outputs the input reception signal 2 to the diversity receiver 94.

The power comparator 93 compares the power of the input reception signal 2 with a predetermined threshold. When the power of the reception signal 2 exceeds the threshold, the comparator 93 turns on the second interference-signal removing apparatus 92 to remove interference from the reception signal 2. However, when the power of the reception signal 2 is equal to or less than the threshold (when the power does not exceed the threshold), the comparator 93 turns off the second interference-signal removing apparatus 92 and directly outputs the reception signal 2.

The diversity receiver 94 performs diversity reception in accordance with the reception signal 1 input from the first interference-signal removing apparatus 91 and the reception signal 2 input from the second interference-signal removing apparatus 92. Specifically, the receiver 94 selects and receives a higher-level signal out of the reception signals 1 and 2 or synthesizes the reception signals 1 and 2 at a proper ratio and receives the synthesis result.

As described above, the diversity reception system of this embodiment includes the first interference-signal removing apparatus 91 and second interference-signal removing apparatus 92 for removing interference signals from reception signals including a wide-band signal and a plurality of interference signals having a band narrower than that of the wide-band signal in two input sections of the diversity receiver 94 so that the interference-signal removing apparatus 91 is always operated to remove interference and the interference-signal removing apparatus 92 can be turned on/off by the power comparator 93 in order to remove interference.

Therefore, the second interference-signal removing apparatus 92 can compensate the characteristic deterioration of the first interference-signal removing apparatus 91 in accordance with the diversity reception effect by making the first interference-signal removing apparatus 91 always operate but making the second interference-signal removing apparatus 92 not operate when no interference signal is present. Moreover, because the first interference-signal removing apparatus 91 always operates, it is possible to immediately remove interference when an interference signal is suddenly input.

The diversity reception system of this embodiment turns on/off the interference-signal removing apparatus 92 in accordance with a result of comparing the power of the reception signal 2 input to the second interference-signal removing apparatus 92 with a predetermined threshold. However, it is also possible to turn on/off the apparatus 92 by using spectrum analysis as described for the ninth embodiment, for example.

Then, a diversity reception system of an eleventh embodiment of the present invention will be described below by referring to the accompanying drawings.

Fig. 11 shows a diversity reception system of the present invention. The diversity reception system is provided with a first interference-signal removing apparatus 101, a second interference-signal removing apparatus 102, a power comparator 103, and a diversity receiver 104.

In the case of the diversity reception system of this embodiment, a signal (reception signal 1) received through a first antenna corresponding to a first branch of the diversity receiver 104 is input to the first interference-signal removing apparatus 101 and a signal (reception signal 2) received through a second antenna corresponding to a second branch of the diversity receiver 104 is input to the second interference-signal removing apparatus 102.

The configuration of the diversity reception system of this embodiment is the same as that of the diversity reception system of the ninth embodiment shown in Fig. 9 except that the interference-signal removing apparatus 101 always operates while the interference-signal removing apparatus 102 is turned on/off. In the case of this embodiment, configurations different from those of the ninth embodiment will be described below in detail.

The first interference-signal removing apparatus 101 always operates to remove interference and outputs the interference-removed reception signal 1 to the diversity receiver 104 and power comparator 103. Moreover, the first interference-signal removing apparatus 101 outputs an interference signal extracted through interference removal to the power comparator 103.

When the second interference-signal removing apparatus 102 is turned on by the power comparator 103, it removes interference from the input reception signal 2 and outputs the interference-removed reception signal 2 to the diversity receiver 104. When the second interference-signal removing apparatus 102 is turned off, it directly outputs the input reception signal 2 to the diversity receiver 104.

The power comparator 103 compares the power of the interference-removed reception signal 1 input from the first interference-signal removing apparatus 101 with that of an interference signal input from the first interference-signal removing apparatus 101 to turn on/off the second interference-signal removing apparatus 102 for interference removal in accordance with the above comparison result.

Specifically, when the difference between the power of the interference-removed reception signal 1 and the power of the extracted interference signal exceeds, for example, a predetermined threshold, the power comparator 103 of this embodiment turns on the second interference-signal removing apparatus 102 to remove interference from the reception signal 2. When the difference is equal to or less than the threshold (when the difference does not exceed the threshold), however, the comparator 103 turns off the second interference-signal removing apparatus 102 to directly output the reception signal 2. The interference-removed reception signal 1 mainly includes wide-band desired signals when interference signals are properly removed.

The diversity receiver 104 performs diversity reception in accordance with the reception signal 1 input from the first interference-signal removing apparatus 101 and the reception signal 2 input from the interference-signal removing apparatus 102. Specifically, the receiver 104 selects a higher-level signal out of the reception signals 1 and 2 or synthesizes the reception signals 1 and 2 at a proper ratio and receives the synthesis result.

As described above, the diversity reception system of this embodiment includes the first interference-signal removing apparatus 101 and the second interference-signal removing apparatus 102 for removing interference signals from reception signals including a wide-band signal and a plurality of interference signals having a band narrower than that of the wide-band signal in two input sections of the diversity receiver 104 so that the interference-signal removing apparatus 101 is always operated to remove interference and the interference-signal removing apparatus 102 can be turned on/off by the power comparator 103 in order to remove interference. Thus, in this embodiment, the interference-signal removing apparatus of a certain branch is turned on/off in accordance with a reception signal or the like of another branch.

Therefore, in the case of the diversity reception system of this embodiment, the second interference-signal removing apparatus 102 can compensate characteristic deterioration of the first interference-signal removing apparatus 101 in accordance with the diversity-reception effect by making the first interference-signal removing apparatus 101 always operate but making the second interference-signal removing apparatus 102 not operate when there is no interference signal. Moreover, because the first interference-signal removing apparatus 101 always operates, it is possible to immediately remove interference, for example, even when an interference signal is suddenly input.

Moreover, this embodiment is constituted so that the second interference-signal removing apparatus 102 is later operated when the power difference between an interference signal extracted by the first interference-signal removing apparatus 101 and an interference-removed reception signal (desired signal) exceeds a predetermined threshold. Thereby, when the reception signal 1 of either-side branch receives interference, it is possible to turn on and operate the turned-off second interference-signal removing apparatus 102 corresponding to the branch.

Then, a diversity reception system of a twelfth embodiment of the present invention will be described below by referring to the accompanying drawings.

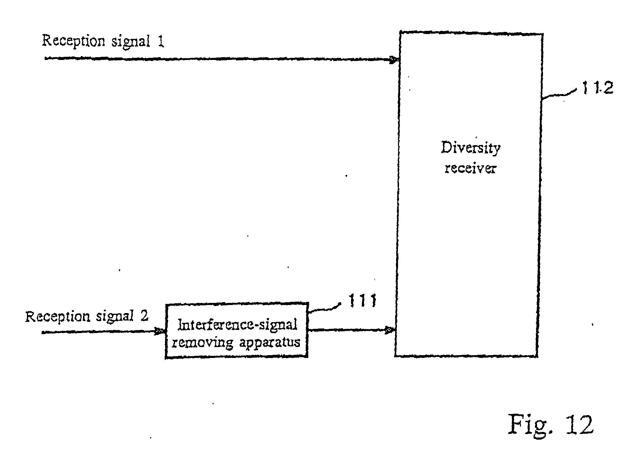

Fig. 12 shows a diversity reception system of the present invention. The diversity reception system is provided with an interference-signal removing apparatus 111 and a diversity receiver 112.

In the case of the diversity reception system of this embodiment, a signal (reception signal 1) received through a first antenna corresponding to a first branch of the diversity receiver 112 is directly input to the diversity receiver 112 and a signal (reception signal 2) received through a second antenna corresponding to a second branch of the diversity receiver 112 is input to the interference-signal removing apparatus 111.

The interference-signal removing apparatus 111 always operates to remove interference from the input reception signal 2 and outputs the interference-removed reception signal 2 to the diversity receiver 112.

The diversity receiver 112 performs diversity reception in accordance with the input reception signal 1 and the reception signal 2 input from the interference-signal removing apparatus 11. Specifically, the receiver 112 selects a higher-level signal out of the reception signals 1 and 2 or synthesizes the reception signals 1 and 2 at a proper ratio and receives the synthesis result.

As described above, the diversity reception system of this embodiment includes the interference-signal removing apparatus 111 for removing interference signals from reception signals including a wide-band signal and a plurality of interference signals having a band narrower than that of the wide-band signal in the input section of either side of the diversity receiver 112 so as to directly input the reception signal 1 to the opposite-side input section of the diversity receiver 112, always operate the interference-signal removing apparatus 111, and thereby if an interference signal is generated, remove interference from only either side (second branch) of two diversity reception inputs.

Therefore, when no interference signal is present, the characteristic of the reception signal 1 of the first branch is improved but that of the reception characteristic of the reception signal 2 of the second branch is slightly deteriorated because the interference-signal removing apparatus 111 always operates. However, this deterioration of the characteristic can be compensated by the diversity-reception effect of the diversity receiver 112. Moreover, when an interference signal is present, the diversity synthesis effect cannot be greatly obtained because the interference-signal removing apparatus 111 operates to remove interference from the reception signal 2 while the reception signal 1 is influenced by interference. However, it is completely possible to perform reception at a quality effective for practical use. The configuration of this embodiment is effective when adding a new interference-signal removing apparatus to an existing diversity reception system having no interference-signal removing apparatus and thereby, it is possible to minimize equipment load.

Then, a diversity reception system of a thirteenth embodiment of the present invention will be described below by referring to the accompanying drawings.

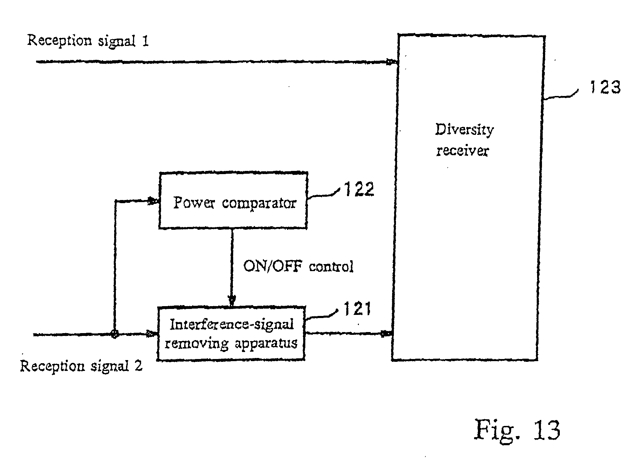

Fig. 13 shows a diversity reception system of the present invention. The diversity reception system is provided with an interference-signal removing apparatus 121, a power comparator 122, and a diversity receiver 123.

In the case of the diversity reception system of this embodiment, a signal (reception signal 1) received through a first antenna corresponding to a first branch of the diversity receiver 123 is directly input to the diversity receiver 123 and a signal (reception signal 2) received through a second antenna corresponding to a second branch of the diversity receiver 123 is input to the interference-signal removing apparatus 121 and power comparator 122.

The configuration of the diversity reception system of this embodiment is the same as that of the diversity reception system of the above twelfth embodiment shown in Fig. 12 except that the interference-signal removing apparatus 121 is turned on/off. In the case of this embodiment, components different from those of the twelfth embodiment will be described below in detail.

When the interference-signal removing apparatus 121 is turned on by the power comparator 122, it removes interference from the input reception signal 2 and outputs the interference-removed reception signal 2 to the diversity receiver 123. When the second interference-signal removing apparatus 121 is turned off, it directly outputs the input reception signal 2 to the diversity receiver 123.

The power comparator 122 compares the power of the input reception signal 2 with a predetermined threshold. When the power of the reception signal 2 exceeds the threshold, the comparator 122 turns on the interference-signal removing apparatus 121 to remove interference from the reception signal 2. However, when the power of the reception signal 2 is equal to or less than the threshold (when the power does not exceed the threshold), the comparator 122 turns off the interference-signal removing apparatus 121 and directly outputs the reception signal 2.

The diversity receiver 123 performs diversity reception in accordance with the input reception signal 1 and the reception signal 2 input from the interference-signal removing apparatus 121. Specifically, the receiver 123 selects and receives a higher-level signal out of the reception signals 1 and 2 or synthesizes the reception signals 1 and 2 at a proper ratio and receives the synthesis result.

As described above, the diversity reception system of this embodiment includes the interference-signal removing apparatus 121 for removing interference signals from reception signals including a wide-band signal and a plurality of interference signals having a band narrower than that of the wide-band signal in the input section of either side of the diversity receiver 123 and the opposite-side input section of the diversity receiver 123 makes it possible to turn on/off the interference-signal removing apparatus 121 by the power comparator 122 in order to remove interference by directly inputting the reception signal 1.

Therefore, it is possible to obtain the same advantage as the case of the above twelfth embodiment. Moreover, an interference-signal removing apparatus using the adaptive control mode has an inferior interference-removal response because it has a learning time immediately after an operation. In the case of this embodiment, however, it is possible to reduce power consumption by turning on/off the interference-signal removing apparatus 121. Particularly, the configuration of this embodiment is very effective in an environment in which an interference signal is hardly generated.

Though the diversity reception system of this embodiment turns on/off the interference-signal removing apparatus 121 in accordance with a result of comparing the power of the input reception signal 2 input to the interference-signal removing apparatus 121 with a predetermined threshold, it is also possible to turn on/off the apparatus 121 in accordance with the spectrum analysis described for the above ninth embodiment, for example.

Then, a diversity reception system of a fourteenth embodiment of the present invention will be described below by referring to the accompanying drawings.

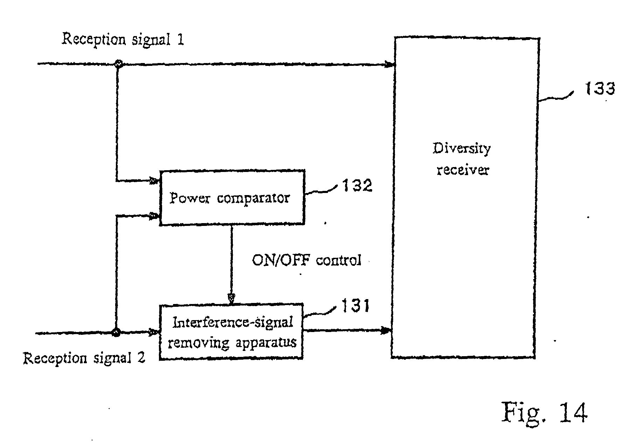

Fig. 14 shows a diversity reception system of the present invention. The diversity reception system is provided with an interference-signal removing apparatus 131, a power comparator 132, and a diversity receiver 133.

In the case of the diversity reception system of this embodiment, a signal (reception signal 1) received through a first antenna corresponding to a first branch of the diversity receiver 133 is directly input to the diversity receiver 133, the reception signal 1 is input to the power comparator 132, and a signal (reception signal 2) received through a second antenna corresponding to a second branch of the diversity receiver 133 is input to the interference-signal removing apparatus 131 and power comparator 132.

The configuration of the diversity reception system of this embodiment is the same as that of the thirteenth embodiment in Fig. 13 except that the configuration of the power comparator 132 for turning on/off the interference-signal removing apparatus 131 is different. Therefore, components different from those of the thirteenth embodiment will be described below in detail.

When the interference-signal removing apparatus 131 is turned on by the power comparator 132, it removes interference from the input reception signal 2 and outputs the interference-removed reception signal 2 to the diversity receiver 132. When the apparatus 131 is turned off, the second interference-signal removing apparatus 131 directly outputs the input reception signal 2 to the diversity receiver 133.

The power comparator 132 compares the power of the input reception signal 1 and that of the input reception signal 2 with a predetermined threshold. When either or both of the power of the reception signal 1 and that of the reception signal 2 exceeds (or exceed) the threshold, the comparator 132 turns on the interference-signal removing apparatus 132 to remove interference from the reception signal 2. When both of the power of the reception signal 1 and that of the reception signal 2 are equal to or less than the threshold (when neither signal 1 nor 2 exceeds the threshold), the comparator 132 turns off the interference-signal removing apparatus 132 and directly outputs the reception signal 2. That is, when the power of at least either of the reception signals 1 and 2 exceeds the threshold, the comparator 132 regards that an interference signal is present and operates the interference-signal removing apparatus 132 to remove interference.

The diversity receiver 133 performs diversity reception in accordance with the input reception signal 1 and the reception signal 2 input from the interference-signal removing apparatus 132. Specifically, the receiver 133 selects a higher-level signal out of the reception signals 1 and 2 or synthesizes the reception signals 1 and 2 at a proper ratio and receives the synthesis result.

As described above, the diversity reception system of this embodiment includes the interference-signal removing apparatus 131 for removing interference from reception signals including a wide-band signal and a plurality of interference signals having a band narrower than that of the wide-band signal in the input section at either side of the diversity receiver 133 and the opposite-side input section of the diversity receiver 133 makes it possible to turn on/off the interference-signal removing apparatus 131 by the power comparator 132 in order to remove interference by directly inputting the reception signal 1.

Therefore, it is possible to obtain the same advantage as the case of the above thirteenth embodiment. Moreover, because a configuration is used in which the interference-signal removing apparatus 131 is operated to remove interference when the power of either of the reception signals 1 and 2 exceeds a threshold, it is possible to detect whether an interference signal is present as early as possible in accordance with the both reception signals 1 and 2 and thereby quickly turn on/off the interference-signal removing apparatus 131.

The diversity reception system of this embodiment turns on/off the interference-signal removing apparatus 131 in accordance with a result of comparing the power of the reception signal 2 input to the interference-signal removing apparatus 131 with a predetermined threshold. However, it is also possible to turn on/off the apparatus 131 through the spectrum analysis as described for the ninth embodiment. Moreover, as described for the ninth embodiment, for example, it is possible to make conditions for turning on/off the interference-signal removing apparatus 131 different from each other every reception signals 1 and 2 of each branch.

In this case, configurations of an interference-signal removing apparatus, a base-station system, a mobile-station system, and a diversity reception system are not always restricted to those described above. It is permitted to use various configurations.

Moreover, applicable fields of the present invention are not always restricted to the above described. It is possible to apply the present invention to various fields.

For example, the present invention can be applied to various systems such as a base-station system, a mobile-station system, and an HDR (High Data Rate) base-station system related to the next-generation portable telephones such as a W-CDMA. Moreover, the present invention can be applied not only to a receiver using the CDMA mode but also to receivers of a base-station system, a mobile-station system, and a relay-station system using various communication modes.

Moreover, it is possible to apply an interference-signal removing apparatus of the present invention to apparatuses having configurations shown in Figs. 20, 22, 23, and 24.

Though various configurations of diversity reception systems provided with an interference-signal removing apparatus of the present invention are described above, it is also possible to use another interference-signal removing apparatus for the diversity reception systems having various configurations. In this case, it is possible to use various configurations for interference-signal removing apparatuses in addition to configurations of the present invention.

Furthermore, it is permitted to use a configuration controlled by a processor or controlled when the processor executes a control program stored in a ROM in a hardware resource provided with the processor and a memory for various processings to be executed by an interference-signal removing apparatus, a base-station system, a mobile-station system, or a diversity reception system of the present invention or it is permitted that each functional means for executing the processings is constituted as an independent hardware circuit.

Furthermore, it is possible to regard the present invention as a computer-readable recording medium such as a floppy disk or CR-ROM storing the above control program or the program (itself) and execute processings of the present invention by inputting the above control program from a recording medium to a computer and making a processor execute the program.

As described above, to remove narrow-band interference signals from input signals including wide-band desired signals and the narrow-band interference signals, an interference-signal removing apparatus of the present invention restricts effective word lengths of digital values of the input signals, adds noises to the input signals, controls the input signals by multiplying the input signals by a control coefficient of less than 1, estimates interference signals included in the input signals in accordance with the controlled input signals, extracts interference signals included in the input signals in accordance with the above estimation result, and removes the extracted interference signals from the input signals. Thereby, it is possible to prevent even a desired signal from being removed and improve the quality of an interference-removed input signal.

**Claims**

1. An interference-signal removing apparatus for removing narrow-band interference signals from input signals including wide-band desired signals and the narrow-band interference signals, **characterized in that**
   only interference signals having levels exceeding a predetermined threshold are removed from input signals.

2. An interference-signal removing apparatus for removing narrow-band interference signals from input signals including wide-band desired signals and the narrow-band interference signals, comprising:

   input-signal control means for restricting the effective word length of a digital value of an input signal;
   interference-signal estimation means for estimating interference signals included in input signals in accordance with the input signal whose effective word length is restricted;
   interference-signal extraction means for extracting interference signals included in input signals in accordance with an estimation result by the interference-signal estimation means; and
   interference-signal removal means for removing extracted interference signals from input signals.

3. The interference-signal removing apparatus according to claim 2, **characterized in that**
   the interference-signal extraction means extracts interference signals from input signals whose effective word lengths are restricted.

4. An interference-signal removing apparatus for removing narrow-band interference signals from input signals including wide-band desired signals and the narrow-band interference signals, comprising:

   input-signal control means for adding noises to input signals;
   interference-signal estimation means for estimating interference signals included in input signals in accordance with input signals to which noises are added;
   interference-signal extraction means for extracting interference signals included in input signals in accordance with an estimation result by the interference-signal estimation means; and
   interference-signal removal means for removing extracted interference signals from input signals.

5. The interference-signal removing apparatus according to claim 4, **characterized in that**
   the interference-signal extraction means extracts interference signals from input signals to which noises are added.

6. An interference-signal removing apparatus for removing narrow-band interference signals from input signals including wide-band desired signals and the narrow-band interference signals, comprising:

> input-signal control means for multiplying input signals by a control coefficient of less than 1;
> interference-signal estimation means for estimating interference signals included in input signals in accordance with input signals that are multiplied by the control coefficient;
> interference-signal extraction means for extracting interference signals included in input signals in accordance with an estimation result by interference-signal estimation means; and
> interference-signal removal means for removing extracted interference signals from input signals.

**7.** The interference-signal removing apparatus according to claim 6, **characterized in that**
the interference-signal extraction means extracts interference signals from input signals multiplied by a control coefficient.

**8.** The interference-signal removing apparatus according to any one of claims 2 to 7, **characterized in that**
the input-signal control means has interference-signal-level estimation means for estimating levels of interference signals included in input signals and controls input signals in accordance with estimated interference-signal levels.

**9.** A base-station system of a mobile communication system, **characterized in that** the base-station system has the interference-signal removing apparatus of any one of claims 1 to 8 and supplies signals radio-received from a mobile-station system to the interference-signal removing apparatus to remove interference signals included in the radio-received signals by the interference-signal removing apparatus.

**10.** A diversity receiver **characterized in that** the receiver has the interference-signal removing apparatus of any one of claims 1 to 8 on at least one branch and makes it possible to supply a signal of the at least one branch to the interference-signal removing apparatus and remove interference signals included in the signal by the interference-signal removing apparatus.

Reception signal ( wide-band signal + interference signal ) r ( t )

5

Wide-band
signal

+

−

V ( t )

1
Interference-
signal-power
estimation section

2
Word-length
restriction
section

4
Interference-
signal extraction
section

h ( t )

3
w ( t )
Interference-
signal estimation
section
e ( t )

Fig. 1

EP 1 239 598 A2

Fig. 2

Reception signal ( wide-band signal + interference signal ) r (t)

Wide-band signal

26

Interference-signal-power estimation section  21

$\alpha$ times

22

$1 / \alpha$ times

25

Interference-signal extraction section  24

v (t)

h (t)

w (t)

Interference-signal estimation section  23

e (t)

V'(t)

Fig. 3

Reception signal ( wide-band signal + interference signal ) r (t)

35

Wide-band signal

34

Interference-signal extraction section

v (t)

+

−

31

Interference-signal-power estimation section

32

Word-length restriction section

h (t)

33

w (t)

Interference-signal estimation section

e (t)

Fig. 4

40

Reception signal ( wide-band signal + interference signal ) r (t)

Wide-band signal

46

+
−

**41**
Interference-signal-power estimation section

**42**
Noise generation circuit

**43**

w (t)

**45**
Interference-signal extraction section

v (t)

h (t)

**44**
Interference-signal estimation section

e (t)

Fig. 5

Fig. 6

Fig. 7

Rection signal (wide-band signal + interference signal ) r (t)

75

Wide-band signal

$+$

$-$

v (t)

74

Interference-signal extraction section

71

Noise generation circuit

72

Noise power fixed

h (t)

73

w (t)

Interference-signal estimation section

e (t)

Fig. 8

Reception signal 1

First interference-
signal removing
apparatus — 81

ON/ OFF control

First power
comparator — 83

Second power
comparator — 84

ON/OFF control

Reception signal 2

Second interference-
signal removing
apparatus — 82

Diversity
receiver — 85

Fig. 9

Reception signal 1 → [First interference-signal removing apparatus] 91 → [Diversity receiver] 94

[Power comparator] 93

ON/OFF control

Reception signal 2 → [Second interference-signal removing apparatus] 92 → Diversity receiver

Fig. 10

Reception signal 1 ──→┌─────────────────────┐ ⟋101
                      │ First interference-signal │
                      │ removing apparatus   │─────●─────────────→┌──────────┐
                      └─────────────────────┘     │               │          │
                              │              Interference-         │          │
                              │              removed signal        │          │
              Extracted interference signal                        │ Diversity │ ⟋104
                              │                                     │ receiver  │
                              ↓                                     │          │
                      ┌─────────────────────┐                      │          │
                      │   Power comparator   │←─────               │          │
                      └─────────────────────┘                      │          │
                              │            ⟍103                     │          │
                              │                                     │          │
                      ON/OFF control                               │          │
                              │                                     │          │
                              ↓                     ⟋102            │          │
              ──→┌─────────────────────┐                           │          │
                 │ Second interference-signal │──────────────────→ │          │
                 │ removing apparatus   │                          │          │
Reception signal 2 └─────────────────────┘                         └──────────┘

Fig. 11

Reception signal 1 ⟶

Reception signal 2 ⟶ | Interference-signal removing apparatus | 111 ⟶ | Diversity receiver | 112

Fig. 12

Reception signal 1

Power comparator — 122

ON/OFF control

Interference-signal removing apparatus — 121

Reception signal 2

Diversity receiver — 123

Fig. 13

Reception signal 1

Power comparator — 132

ON/OFF control

Interference-signal removing apparatus — 131

Reception signal 2

Diversity receiver — 133

Fig. 14

(a) Reception-signal spectrums when interference signals are present

(b) Spectrum image when applying word-length restriction to input

By performing word-length restriction, low-level interference signal is not estimated.

(c) Extracted interference-signal spectrums

(d) Interference-signal-removed spectrums

Spectrum component expanded for interference-signal removal becomes noise component.

Fig. 15

**Fig. 16**

(a) Reception-signal spectrums when interference signals are present

(b) Spectrum image when applying word-length restriction to input

Even if setting high quantization-noise level, the level does not influence interference-removed reception signal.

(c) Extracted interference-signal spectrums

Wide-band component is also extracted depending on filter characteristic. However, noise component is not extracted because spectrum of narrow-band interference wave is not expanded.

(d) Interference-signal-removed spectrums

Removed because wide-band component is extracted

143

Reception signal r(t)                                        Wide-band signal

(Wide-band signal + interference signal)

142

| Interference-signal extraction section |

$V(t)$

$+$      $-$

$h(t+1)$

141

$r(t)$

| Interference-signal estimation section |

$e(t)$

Fig. 17

Fig. 18

Fig. 19

DS/CDMA signal + FM signal

Input signal →

DS/CDMA signal + FM signal

153

+

e (t)

DS/CDMA signal

Output signal →

FM signal
FM (t)

Delay element

r (t − τ)

Adaptive filter

151

152

154

Filter-tap-coefficient-operetion control section

Fig. 20

Fig. 21

CDMA signal
+ FM signal

Input signal
r (t)

161

Delay element

r(t~ τ )

163

e(t~ τ )

CDMA signal

Output signal

162

Adaptive filter

r(t)

h(t)

FM signal
FM (t)

164

Filter-tap-coefficient-operation control section

r(t)

Fig. 22

DS/CDMA signal + FM signal

Input signal →

rI (t)

FM signal FMI (t)

175a

eI (t)

DS/CDMA signal

rI (t − τ)

172a

Adaptive filter

171a

Delay element

172b

Adaptive filter

174a

Filter-tap-coefficient-operation control section

176

174b

Adaptive filter

173a

Adaptive filter

FM signal FMQ (t)

DS/CDMA signal

DS/CDMA signal+FM signal

Input signal →

Delay element

rQ (t − τ)

171b

173b

rQ (t)

175b

eQ (t)

Fig. 23

Fig. 24

Reception signal 1 → [First interference-signal removing apparatus] 191 →

[Diversity receiver] 193

Reception signal 2 → [Second interference-signal removing apparatus] 192 →

Fig. 25

Fig. 26

Fig. 27

Fig. 28

Fig. 29

(a) When power of interference signal is large

(b) When power of interference signal is small

Fig. 30